# EUROPEAN PATENT APPLICATION

(11) **EP 4 852 444 A1**
(43) Date of publication of application: **09.12.2026**
(21) Application number: 25748131.7
(22) Date of filing: 24.01.2025
(51) Int. Cl.: H04N 25/773, H04N 25/47

(54) **PHOTOELECTRIC CONVERSION DEVICE, PHOTOELECTRIC CONVERSION SYSTEM, AND MOBILE BODY**

(30) Priority: 31.01.2024 JP 2024013301
(71) Applicant: Canon Kabushiki Kaisha, Tokyo 146-8501 (JP)
(72) Inventor: MORIMOTO, Kazuhiro, Tokyo 146-8501 (JP)
(74) Representative: TBK
(86) International application number: PCT/JP2025/002317
(87) International publication number: WO 2025/164549

(57) **Abstract**

A photoelectric conversion apparatus having a plurality of pixels, each of which counts photons and outputs a count value, includes a memory, a first computing unit configured to multiply a count value generated in each pixel by a first coefficient to generate a first computed value, a second computing unit configured to multiply data provided from the memory by a second coefficient to generate a second computed value, an adder configured to add the first computed value and the second computed value to generate an addition value, and a memory controller configured to update data stored in the memory in accordance with the addition value, wherein the number of bits of the first computed value generated by the first computing unit is larger than the number of bits of the count value.

## Description

### TECHNICAL FIELD

The present invention relates to a photoelectric conversion apparatus, a photoelectric conversion system, and a moving body.

### BACKGROUND ART

PTL 1 describes a configuration in which each pixel includes an avalanche photodiode (APD), a waveform shaping unit that shapes a signal output from the APD to generate a detection signal, a counting unit that counts the detection signal, and an IIR filter that processes the counting result of the counting unit.

### CITATION LIST

### PATENT LITERATURE

PTL 1: Japanese Patent Laid-Open No. 2021-044636

### SUMMARY OF INVENTION

### TECHNICAL PROBLEM

In the IIR filter, if the number of bits of data indicating the counting result output from the counting unit is the same as the number of bits of an adder, part of image information (for example, information after the decimal point) will be lost, making it difficult to obtain a high-quality image.

The present invention has as its object to provide a technique advantageous for obtaining a high-quality image in a photoelectric conversion apparatus that includes a plurality of pixels, each of which counts photons and outputs a count value.

### SOLUTION TO PROBLEM

According to one aspect of the present invention, there is provided a photoelectric conversion apparatus that includes a plurality of pixels, each of which counts photons and outputs a count value, the photoelectric conversion apparatus comprising a memory, a first computing unit configured to multiply a count value generated in each pixel by a first coefficient to generate a first computed value, a second computing unit configured to multiply data provided from the memory by a second coefficient to generate a second computed value, an adder configured to add the first computed value and the second computed value to generate an addition value, and a memory controller configured to update data stored in the memory in accordance with the addition value, wherein the number of bits of the first computed value generated by the first computing unit is larger than the number of bits of the count value.

### ADVANTAGEOUS EFFECTS OF INVENTION

According to the present invention, a technique advantageous for obtaining a high-quality image in a photoelectric conversion apparatus that includes a plurality of pixels, each of which counts photons and outputs a count value, is provided.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing the basic configuration of a photoelectric conversion apparatus according to an embodiment;
Fig. 2 is a view showing an example of the configuration of a sensor substrate;
Fig. 3 is a view showing an example of the configuration of a circuit substrate;
Fig. 4 is an equivalent circuit diagram of one pixel and a signal processing unit;
Fig. 5A is a view for explaining the operation of a pixel;
Fig. 5B is a view for explaining the operation of a pixel;
Fig. 6 is a view showing the configuration of an image processing unit in a photoelectric conversion apparatus according to the first embodiment;
Fig. 7 is a view exemplarily showing the operation of the photoelectric conversion apparatus according to the first embodiment;
Fig. 8 is a view exemplarily showing the operation of the image processing unit in the photoelectric conversion apparatus according to the first embodiment;
Fig. 9 is a view showing the configuration of an image processing unit in a photoelectric conversion apparatus according to the second embodiment;
Fig. 10 is a view showing the configuration of an image processing unit in a photoelectric conversion apparatus according to the third embodiment;
Fig. 11 is a view exemplarily showing the operation of the photoelectric conversion apparatus according to the third embodiment;
Fig. 12 is a view exemplarily showing the operation of an image processing unit in a photoelectric conversion apparatus according to the fourth embodiment;
Fig. 13 is a view exemplarily showing the operation of an image processing unit in a photoelectric conversion apparatus according to the fifth embodiment;
Fig. 14 is a view exemplarily showing the operation of an image processing unit in a photoelectric conversion apparatus according to the sixth embodiment;
Fig. 15 is a view showing a modification of the first computing unit;
Fig. 16 is a view showing a specific example of a data converter in the first computing unit;
Fig. 17 is a view schematically showing the operation of a bit width extension unit;
Fig. 18 is a view schematically showing the operation of a nonlinear correction unit;
Fig. 19 is a view schematically showing the operation of a smoothing processing unit;
Fig. 20 is a view showing the configuration of a photoelectric conversion system according to the seventh embodiment;
Fig. 21 is a view showing the first application example;
Fig. 22A is a view showing the second application example;
Fig. 22B is a view showing the second application example;
Fig. 23 is a view showing the third application example;
Fig. 24 is a view showing the fourth application example;
Fig. 25A is a view showing the fifth application example;
Fig. 25B is a view showing the fifth application example;
Fig. 26A is a view showing the sixth application example;
Fig. 26B is a view showing the sixth application example; and
Fig. 27 is a view showing the seventh application example.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In this specification, a plan view corresponds to viewing a photoelectric conversion apparatus from a direction perpendicular to the light incident surface of a semiconductor layer, and is synonymous with orthogonal projection to the light incident surface. A sectional view corresponds to a plane in the direction perpendicular to the light incident surface of the semiconductor layer. Note that if the light incident surface of the semiconductor layer is rough microscopically, the plan view is defined with reference to the light incident surface of the semiconductor layer when viewed macroscopically.

The present invention is applicable to a photoelectric conversion apparatus including a plurality of pixels, each of which counts photons and outputs a count value. As an example of the photoelectric conversion apparatus, a photoelectric conversion apparatus in which each pixel includes an avalanche photodiode (to be also referred to as an APD hereinafter) will be described below. However, the present invention is also applicable to another photoelectric conversion apparatus such as, for example, a photoelectric conversion apparatus called an EMCCD or a photoelectric conversion apparatus including a scintillator.

In the following description of exemplary embodiments, the anode of an avalanche photodiode (APD) is set to a fixed potential, and a signal is extracted from the cathode side. Therefore, a semiconductor region of the first conductivity type containing, as a majority carrier, a charge with the same first polarity as that of a signal charge is an n-type semiconductor region, and a semiconductor region of the second conductivity type containing, as a majority carrier, a charge with the second polarity different from that of the signal charge is a p-type semiconductor region. Note that even if the cathode of the APD is set to a fixed potential and a signal is extracted from the anode side, the present invention is viable. In this case, a semiconductor region of the first conductivity type containing, as a majority carrier, a charge with the same first polarity as that of a signal charge is a p-type semiconductor region, and a semiconductor region of the second conductivity type containing, as a majority carrier, a charge with the second polarity different from that of the signal charge is an n-type semiconductor region. A case in which one node of the APD is set to a fixed potential will be described below but the potentials of both the nodes may be variable.

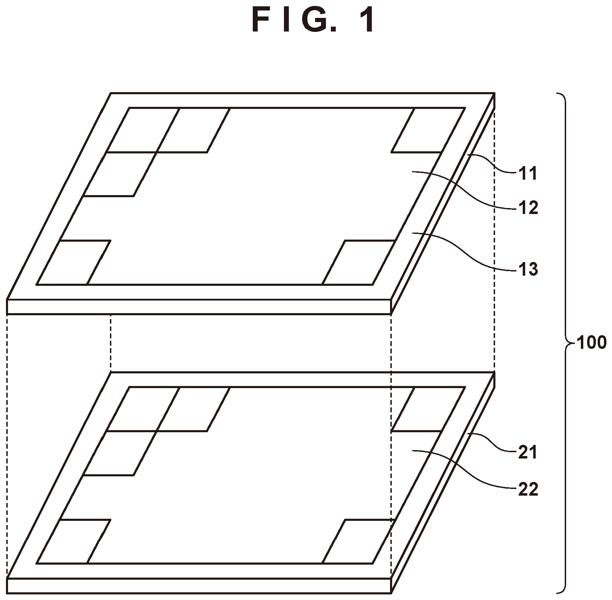

The basic configuration and driving method common to photoelectric conversion apparatuses and driving methods therefor according to a plurality of embodiments to be described later will first be described with reference to Figs. 1, 2, 3, 4, 5A, and 5B.

Fig. 1 is a view showing the basic configuration of a photoelectric conversion apparatus 100 according to an embodiment. An example in which the photoelectric conversion apparatus 100 is formed as a stacked photoelectric conversion apparatus will be described here, but the present invention is also applicable to photoelectric conversion apparatuses other than the stacked photoelectric conversion apparatus. The photoelectric conversion apparatus 100 can be formed by, for example, stacking a plurality of substrates including a sensor substrate 11 and a circuit substrate 21, and electrically connecting the plurality of substrates. The sensor substrate 11 can include the first semiconductor layer including photoelectric conversion elements 102 (to be described later), and the first wiring structure. The circuit substrate 21 can include the second semiconductor layer including circuits such as in-pixel processing units 103 (to be described later), and the second wiring structure. The photoelectric conversion apparatus 100 can be formed by stacking, for example, the second semiconductor layer, the second wiring structure, the first wiring structure, and the first semiconductor layer in this order. The photoelectric conversion apparatus 100 to be described in each of the following embodiments can be, for example, a back-side illumination photoelectric conversion apparatus but the photoelectric conversion apparatus according to the present invention may be formed as a front-side illumination photoelectric conversion apparatus.

The sensor substrate 11 can include a semiconductor layer including a pixel array region 12 including a plurality of pixels, and a peripheral region 13 arranged on the periphery of the pixel array region 12. A region between the outer edge of the pixel array region 12 and the outer edge (the scribe region including the outer edge) of the sensor substrate 11 can be the peripheral region 13. In the peripheral region 13, circuit elements such as active elements may or may not be arranged. The circuit substrate 21 can include a semiconductor layer including a circuit region 22 where a signal detected by a pixel in the pixel array region 12 is processed.

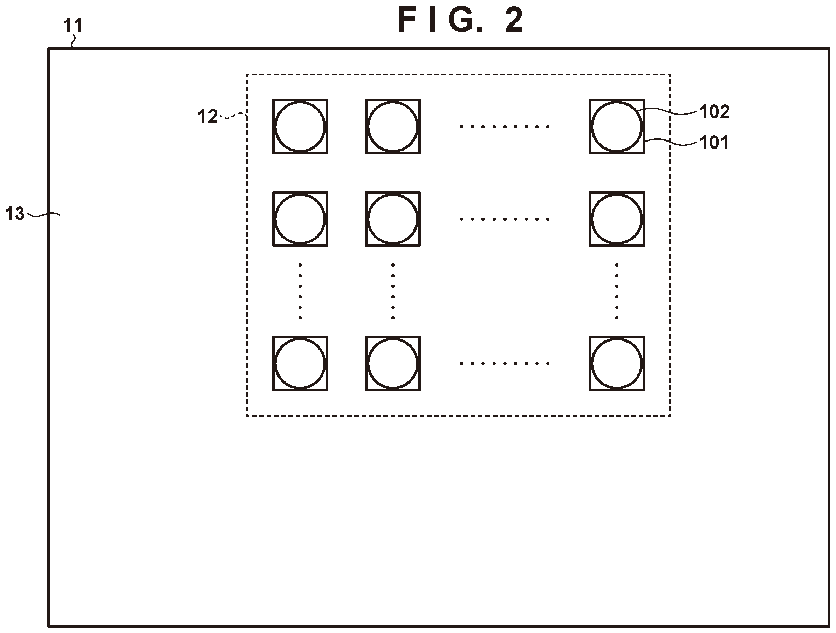

Fig. 2 is a view showing an example of the configuration of the sensor substrate 11. In the pixel array region 12, a plurality of pixels 101 can be arranged in a two-dimensional array to form a plurality of rows and a plurality of columns. Each pixel 101 can include the photoelectric conversion element 102 including an avalanche photodiode (APD).

Each pixel 101 arranged in the pixel array region 12 can be a pixel for forming an image. However, if the sensor substrate 11 or the photoelectric conversion apparatus 100 is applied to TOF (Time of Flight), each pixel 101 need not be a pixel for forming an image. That is, each pixel 101 may be a pixel for measuring the time at which light reaches and the amount of light.

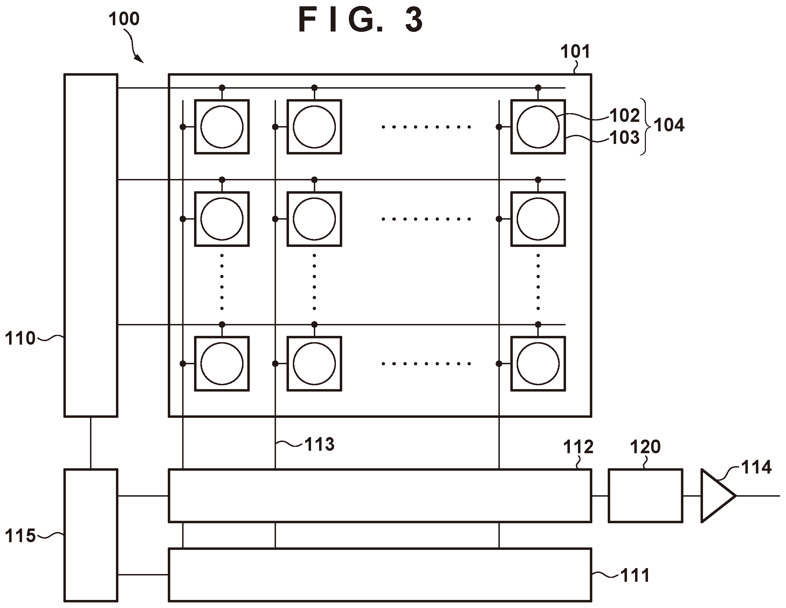

Fig. 3 is a view showing the configuration of the circuit substrate 21. The circuit substrate 21 can include, for example, the in-pixel processing units 103 each configured to process a signal (electrical signal) generated according to charges (signal charges) generated by photoelectric conversion in the photoelectric conversion element 102. The circuit substrate 21 can also include a readout circuit 112, a control pulse generation unit 115, a horizontal scanning circuit 111, signal lines 113, a vertical scanning circuit 110, and an image processing unit 120. One in-pixel processing unit 103 can be provided for one pixel 101. Each photoelectric conversion element 102 shown in Fig. 2 and each in-pixel processing unit 103 shown in Fig. 3 can electrically be connected via a connection wiring provided for each pixel 101.

For example, the vertical scanning circuit 110 can be configured to generate the second control pulse by receiving the first control pulse supplied from the control pulse generation unit 115, and supply the second control pulse to each pixel 101. The vertical scanning circuit 110 can include, for example, a logical circuit such as a shift register and an address decoder. A signal output from the photoelectric conversion element 102 of each pixel 101 can be processed by the in-pixel processing unit 103 provided in correspondence with the pixel 101. The in-pixel processing unit 103 can include a counter and a memory, and the memory can hold a digital value.

The horizontal scanning circuit 111 can be configured to supply, to the in-pixel processing unit 103, the third control pulse for sequentially selecting columns to read out a digital signal from the memory of each pixel 101 that holds the signal. The circuit substrate 21 can include the plurality of signal lines 113. Pixel signals are output, to the plurality of signal lines 113, from the in-pixel processing units 103 assigned to the pixels 101 of the row selected by the vertical scanning circuit 110. The pixel signals output to the plurality of signal lines 113 can be read out by the readout circuit 112, and sequentially supplied from the readout circuit 112 to the image processing unit 120 under the control of the horizontal scanning circuit 111. The image processing unit 120 performs TIIR filter processing on the count value (pixel signal) sequentially supplied from the readout circuit 112, and provides the obtained data to an output unit 114. The output unit 114 can output the data provided from the image processing unit 120 to a recording unit or a signal processing unit outside the photoelectric conversion apparatus 100.

Referring to Fig. 2, the photoelectric conversion elements 102 or pixels 101 may be arranged in a one-dimensional array in the pixel array region 12. Each in-pixel processing unit 103 may be assigned to at least two photoelectric conversion elements 102 or pixels 101.

As shown in Figs. 2 and 3, the plurality of in-pixel processing units 103 can be arranged in a region overlapping the pixel array region 12 in a plan view. Then, the vertical scanning circuit 110, the horizontal scanning circuit 111, the readout circuit 112, the output unit 114, the control pulse generation unit 115, and the image processing unit 120 can be arranged to overlap the region between the outer edge of the sensor substrate 11 and the outer edge of the pixel array region 12 in a plan view. In other words, the vertical scanning circuit 110, the horizontal scanning circuit 111, the readout circuit 112, the output unit 114, the control pulse generation unit 115, and the image processing unit 120 can be arranged in a region overlapping the peripheral region 13 of the sensor substrate 11 in a plan view.

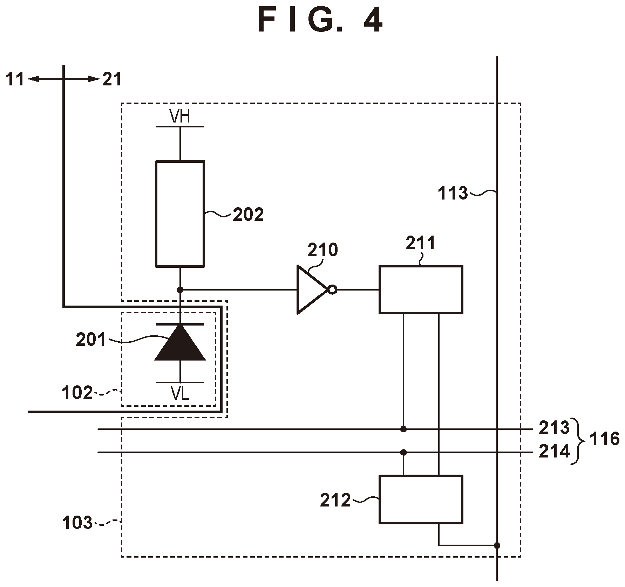

Fig. 4 exemplifies an equivalent circuit of one pixel 101 in Fig. 2 and one in-pixel processing unit 103 in Fig. 3. The photoelectric conversion element 102 includes an APD 201. The APD 201 generates charge pairs corresponding to incident light by photoelectric conversion. The anode of the APD 201 is supplied with a voltage VL (first voltage). The cathode of the APD 201 can be supplied with a voltage VH (second voltage) higher than the voltage VL supplied to the anode. A reverse bias voltage (predetermined voltage) that can cause the APD 201 to perform an avalanche multiplication operation can be supplied between the anode and the cathode. By setting the state in which such reverse bias voltage is supplied between the anode and the cathode, charges generated by the incident light cause an avalanche multiplication operation, thereby generating an avalanche current.

A mode of operating an APD in a state in which the voltage between the anode and the cathode is higher than the breakdown voltage is called a Geiger mode. A mode of operating an APD in a state in which the voltage between the anode and the cathode is around or lower than the breakdown voltage is called a linear mode. An APD operated in the Geiger mode is called an SPAD. For example, the voltage VL (first voltage) is -30 V and the voltage VH (second voltage) is 1 V. The APD 201 may be operated in either the linear mode or the Geiger mode.

A quenching element 202 can be arranged to connect the APD 201 and a power supply for supplying the voltage VH. The quenching element 202 functions as a load circuit (quenching circuit) at the time of signal multiplication by an avalanche multiplication operation, and serves to suppress avalanche multiplication by suppressing the voltage supplied to the APD 201 (quenching operation). In addition, the quenching element 202 serves to return, to the voltage VH, the voltage supplied to the APD 201 by sending a current corresponding to a voltage drop caused by a quenching operation (recharging operation).

The in-pixel processing unit 103 can include a waveform shaping unit 210, a counter circuit 211, and a selection circuit 212. The in-pixel processing unit 103 may be a circuit including at least one of the waveform shaping unit 210, the counter circuit 211, and the selection circuit 212. The waveform shaping unit 210 can output a pulse signal by shaping the potential change of the cathode of the APD 201 obtained at the time of detection of a photon. As the waveform shaping unit 210, for example, an inverter circuit can be used. In Fig. 4, the waveform shaping unit 210 is formed by one inverter but the waveform shaping unit 210 may include a plurality of serially connected inverters or include another circuit having the waveform shaping effect.

The counter circuit 211 can count a pulse signal output from the waveform shaping unit 210, and hold a count value. The counter circuit 211 can be configured to reset the count value held in the counter circuit 211 when a control pulse pRES is supplied via a driving line 213. The selection circuit 212 can be supplied with a control pulse pSEL from the vertical scanning circuit 110 in Fig. 3 via a driving line 214 (not shown in Fig. 3) in Fig. 4, thereby switching between electrical connection and non-connection of the counter circuit 211 and the signal line 113. The selection circuit 212 can include, for example, a buffer circuit for outputting a signal.

A switch such as a transistor may be arranged between the quenching element 202 and the APD 201 and/or between the photoelectric conversion element 102 and the in-pixel processing unit 103, thereby controlling electrical connection by the switch. Similarly, a switch such as a transistor may control supply of the voltage VH and/or the voltage VL to the photoelectric conversion element 102.

The photoelectric conversion apparatus 100 may be configured to acquire a pulse detection timing using a Time-to-Digital Converter (to be referred to as a TDC hereinafter) and a memory, instead of the counter circuit 211. The generation timing of the pulse signal output from the waveform shaping unit 210 can be converted into a digital signal by the TDC. A control pulse pREF (reference signal) can be supplied from the vertical scanning circuit 110 in Fig. 1 to the TDC via a driving line to measure the timing of the pulse signal. The TDC can acquire, as a digital signal, a signal obtained when the input timing of the signal output from each pixel via the waveform shaping unit 210 is set as the relative time with reference to the control pulse pREF.

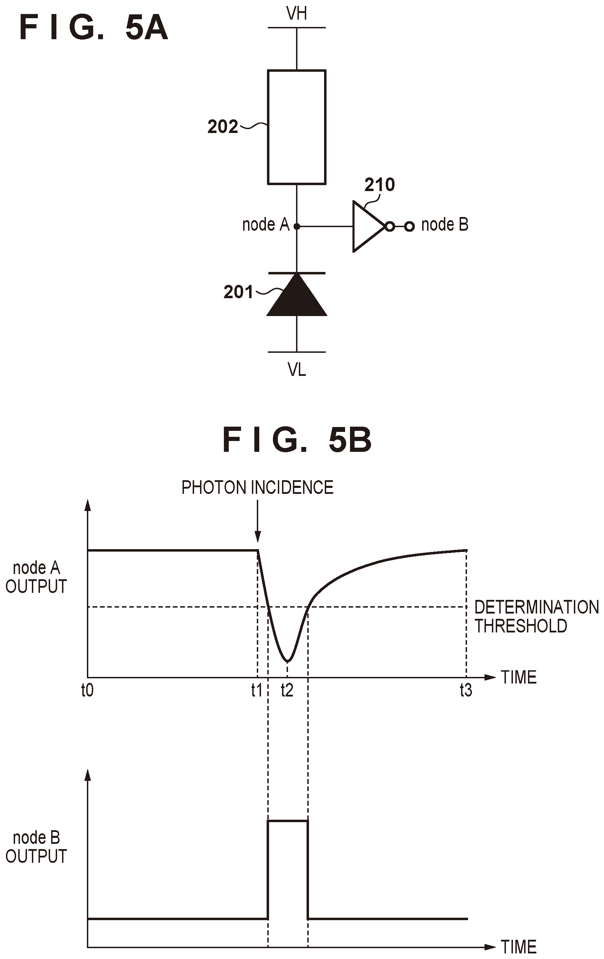

Figs. 5A and 5B are views schematically showing the relationship between the operation of the APD 201 and the output signal. Fig. 5A is a view showing the APD 201, the quenching element 202, and the waveform shaping unit 210 shown in Fig. 4. The input side of the waveform shaping unit 210 is indicated by node A and the output side of the waveform shaping unit 210 is indicated by node B. Fig. 5B shows the waveform change of node A and the waveform change of node B in Fig. 5A.

During a period from time t0 to time t1, a potential difference of VH - VL is applied to the APD 201 shown in Fig. 5A. When a photon enters the APD 201 at time t1, the APD 201 performs an avalanche multiplication operation, and an avalanche multiplication current flows through the quenching element 202, thereby dropping the voltage of node A. If the voltage drop amount becomes larger and the potential difference applied to the APD 201 becomes smaller, the avalanche multiplication operation of the APD 201 stops at time t2, and the voltage level of node A does not drop to a value less than a given value. After that, a current that compensates for the voltage drop from the voltage VL flows through node A during a period from time t2 to time t3, and node A is stabilized at the original potential level at time t3. At this time, a portion of the output waveform of node A, which exceeds a given threshold, is shaped by the waveform shaping unit 210, and output as a signal from node B.

Note that the arrangement of the signal lines 113 and the arrangement of the readout circuit 112, the output unit 114, the image processing unit 120, and the like are not limited to those shown in Fig. 3. For example, the signal lines 113 may be extended in the row direction, and the readout circuit 112 may be arranged at a position to which the signal lines 113 are extended.

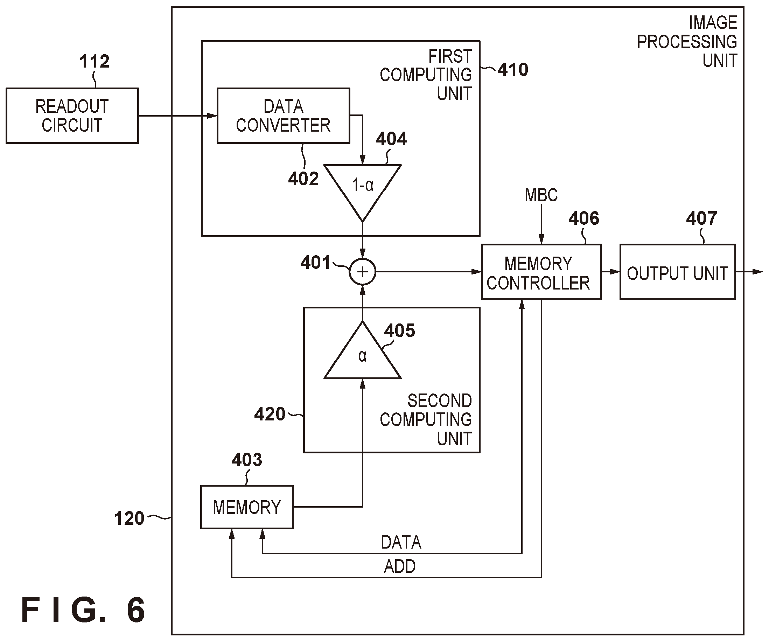

Some embodiments of the photoelectric conversion apparatus 100 will be described below. First, a photoelectric conversion apparatus 100 according to the first embodiment will be described. Fig. 6 is a view showing the configuration of an image processing unit 120 in the photoelectric conversion apparatus 100 according to the first embodiment. The image processing unit 120 can be provided with a count value from each pixel 101 via a signal line 113 and a readout circuit 112. As described above, the count value is obtained by counting a photon in the pixel 101. The image processing unit 120 can include, for example, a memory 403, a first computing unit 410, a second computing unit 420, an adder 401, and a memory controller 406. However, at least one of the memory 403, the first computing unit 410, the second computing unit 420, the adder 401, and the memory controller 406 may be arranged in the pixel 101.

The memory 403 can be formed by, for example, one of a DRAM, an SRAM, a MRAM, an FeRAM, an ReRAM, and an EEPROM, but may be formed by, for example, an assembly of flip-flops or latch circuits. The memory 403 can constitute a frame memory capable of holding data for one frame. One frame can be composed of data of a plurality of pixels 101 arranged in a pixel array region 12. The first computing unit 410 can be configured to multiply the count value generated in each pixel 101 by the first coefficient (here, (1-α)) to generate the first computed value, and provide the first computed value to the adder 401. The second computing unit 420 can be configured to multiply the data provided from the memory 403 (the hold value held by the memory 403) by the second coefficient (here, α) to generate the second computed value, and provide the second computed value to the adder 401. In this example, the first coefficient is (1-α), the second coefficient is α, and the sum of the first coefficient and the second coefficient is 1. However, the first coefficient and the second coefficient may be given as independent coefficients that are uncorrelated with each other. The first coefficient can be a value larger than 0 and smaller than 1. The second coefficient can be a value larger than 0 and smaller than 1.

The adder 401 can be configured to add the first computed value provided from the first computing unit 410 and the second computed value provided from the second computing unit 420 to generate an addition value. The memory controller 406 can be configured to update the data stored in the memory 403 (the hold value held by the memory 403) in accordance with the addition value generated by the adder 401. For example, the memory controller 406 can be configured to overwrite the data stored in the memory 403 with the addition value generated by the adder 401. In order for the memory controller 406 to write data to the memory 403 and read out data from the memory 403, the memory controller 406 and the memory 403 can be connected to each other by a data bus DATA and an address bus ADD.

The number of bits of the first computed value generated by the first computing unit 410 is larger than the number of bits of the count value provided from each pixel 101 via the signal line 113 and the readout circuit 112. In an example, the number of bits of the count value provided from the pixel 101 via the signal line 113 and the readout circuit 112 is four, and the number of bits of the first computed value generated by the first computing unit 410 is eight. The number of bits of the second computed value generated by the second computing unit 420 and the number of bits of the addition value generated by the adder 401 are larger than the number of bits of the count value provided from each pixel 101 via the signal line 113 and the readout circuit 112. In an example, the number of bits of the second computed value generated by the second computing unit 420 is eight, and the number of bits of the addition value generated by the adder 401 is eight.

The first computing unit 410 can include, for example, a data converter 402 and a first multiplier 404. The data converter 402 can be configured to increase the number of bits (bit width) of the count value provided from each pixel 101 via the signal line 113 and the readout circuit 112. The first multiplier 404 can include the first multiplier 404 that multiplies the count value with the number of bits (bit width) increased by the data converter 402 by the first coefficient (1-α) to generate the first computed value. The second computing unit 405 can include a second multiplier 405 that multiplies the data provided from the memory 403 (the hold value held by the memory 403) by the second coefficient (α) to generate the second computed value. The memory controller 406 can be configured to, for each frame period, read out data (image data) for one frame from the memory 403 and externally output the data from the photoelectric conversion apparatus 100 via an output unit 407. Note that the output unit 407 may constitute all or a part of the output unit 114, or the output unit 407 may be provided after the output unit 407.

Based on a correction signal MBC, which is used to correct image blurring (camera shake) caused by vibration of an image capturing apparatus mounted with the photoelectric conversion apparatus 100, the memory controller 406 may decide (correct) the address in the memory 403 to be updated in accordance with the addition value.

The plurality of pixels 101, the memory 403, the first computing unit 410, the second computing unit 420, the adder 401, and the memory controller 406 are arranged in a single semiconductor chip (packaged semiconductor apparatus). In the single semiconductor chip, the plurality of pixels 101 can be arranged in one semiconductor layer, and at least one of the memory 403, the first computing unit 410, the second computing unit 420, the adder 401, and the memory controller 406 can be arranged in another semiconductor layer. However, the memory 403, the first computing unit 410, the second computing unit 420, the adder 401, and the memory controller 406 may be distributed and arranged in two or more semiconductor layers.

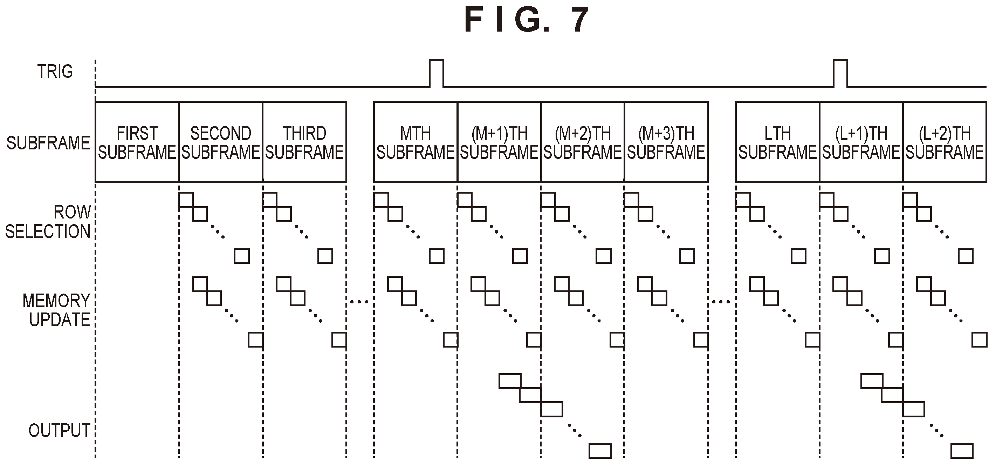

Fig. 7 exemplarily shows the operation of the photoelectric conversion apparatus 100 according to the first embodiment. In an example, a period for externally outputting the image data for one frame from the photoelectric conversion apparatus 100 will be referred to as one frame period. One frame period can be composed of M subframe periods. In one subframe period, the count values of all the pixels 101 constituting the pixel array region 12 can be read out by the readout circuit 112 and provided to the image processing unit 120. In one frame period, the image processing unit 120 can perform TIIR (Temporal Infinite Impulse Response) filter processing on the image data of M subframes, thereby generating and externally outputting the image data of one frame.

In Fig. 7, "frame" indicates "frame period", and "subframe" indicates "subframe period". In addition, "row selection" indicates "row selection period" which is the period during which one row is selected, and "memory update" indicates the period during which the data of the memory 403 is updated with the addition value generated by the adder 401. Furthermore, "output" indicates the period during which the image data of one frame is output from the photoelectric conversion apparatus 100. In the example shown in Fig. 7, the plurality of pixels 101 in the pixel array region 12 are reset in a rolling shutter method, and the count values are row-sequentially read out from the plurality of pixels 101. However, the plurality of pixels 101 in the pixel array region 12 may be driven in a global shutter method.

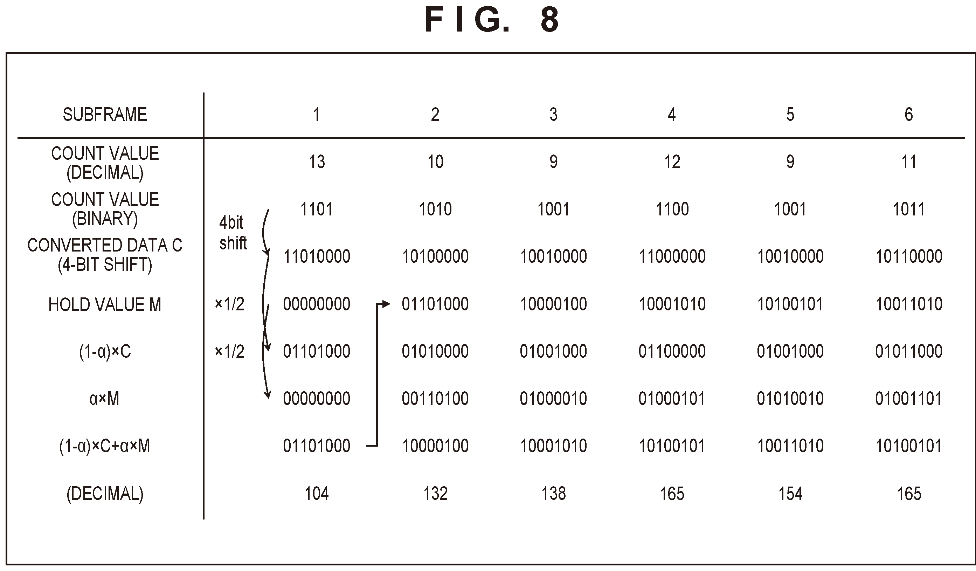

Fig. 8 shows an example in which α is 0.5 (that is, the first coefficient and the second coefficient are 0.5), the count value provided from the pixel 101 is a 4-bit value, and the data converter 402 converts the count value from the 4-bit width into the 8-bit width. In Fig. 8, "count value (decimal)" indicates the count value, which is provided from the pixel 101 at an arbitrary position in the pixel array region 12, expressed in decimal, and "count value (binary)" indicates the count value, which is provided from the pixel 101, expressed in binary. In the example shown in Fig. 8, the data of the count value provided from the pixel 101 is composed of four bits (that is, with a 4-bit width). In Fig. 8, "converted data C" indicates a count value C obtained by the data converter 402 converting the count value with the 4-bit width, which is provided from the pixel 101 at the arbitrary position, into a count value with an 8-bit width. In the example shown in Fig. 8, the data converter 402 increases the number of bits (bit width) by shifting the count value provided from the pixel 101 at the arbitrary position to the left by four bits. In Fig. 8, "hold value M" indicates data (hold value) M read out from the corresponding address (arbitrarily corresponding address in the pixel array region 12) in the memory 403.

In Fig. 8, "(1-α)×C" indicates the first computed value generated by the first multiplier 404, and "α×M" indicates the second computed value generated by the second multiplier 405. Furthermore, in Fig. 8, "(1-α)×C+α×M" indicates the addition value generated by the adder 401 and expressed in binary, and "(decimal)" indicates the addition value generated by the adder 401 and expressed in decimal.

In the period of the first subframe (subframe = 1), the bit width of "1101", which is the count value provided from the pixel 101 at an arbitrary position, is extended to "11010000" by the data converter 402. In addition, in the period of the first subframe, the first multiplier 404 multiplies "11010000" by the first coefficient (1-α) = 0.5, thereby generating "01101000" as the first computed value. Furthermore, in the period of the first subframe, the second multiplier 405 multiplies the hold value "00000000" stored at the corresponding address in the memory 403 by the second coefficient α = 0.5, thereby generating "00000000" as the second computed value. In the period of the first subframe, the adder 401 adds the first computed value and the second computed value, thereby generating "01101000" as the addition value. This addition value is overwritten at the corresponding address in the memory 403 as the hold value M. That is, "00000000" as the data at the corresponding address in the memory 403 is updated with "01101000".

In the period of the second subframe (subframe = 2), the bit width of "1010", which is the count value provided from the pixel 101 at the arbitrary position, is extended to "10100000" by the data converter 402. In addition, in the period of the first subframe, the first multiplier 404 multiplies "10100000" by the first coefficient (1-α) = 0.5, thereby generating "01010000" as the first computed value. Furthermore, in the period of the second subframe, the second multiplier 405 multiplies the hold value "01101000" stored at the corresponding address in the memory 403 by the second coefficient α = 0.5, thereby generating "00110100" as the second computed value. In the period of the second subframe, the adder 401 adds the first computed value and the second computed value, thereby generating "10000100" as the addition value. This addition value is overwritten at the corresponding address in the memory 403 as the hold value M. That is, "01101000" as the data at the corresponding address in the memory 403 is updated with "10000100".

Subsequently, from the period of the second subframe to the period of the Mth subframe, similar processing is repeated based on the count value provided from the pixel 101 at the arbitrary position and the data (hold value) stored at the corresponding address in the memory 403. This filter processing is called TIIR filter processing. As in this embodiment, by extending the bit width in the first computing unit 410, the data overwritten at the corresponding address in the memory 403 is smoothed with high temporal resolution, resulting in data with an improved SNR (signal-to-noise ratio). Hence, a high-quality image can be obtained.

On the other hand, if the bit width is not extended in the first computing unit 410, the data of lower bits will be lost during calculations performed by the first computing unit 410, the second computing unit 420, and the adder 401. In this case, no improvement in image quality can be expected from the TIIR filter processing.

The memory controller 406 may compress the addition value generated by the adder 401 to generate compressed data, and update the value stored in the memory 403 based on the compressed data. In this case, the second computing unit 429 generates the second computed value by multiplying the data, which is obtained by decompressing the compressed data provided from the memory 403, by the second coefficient.

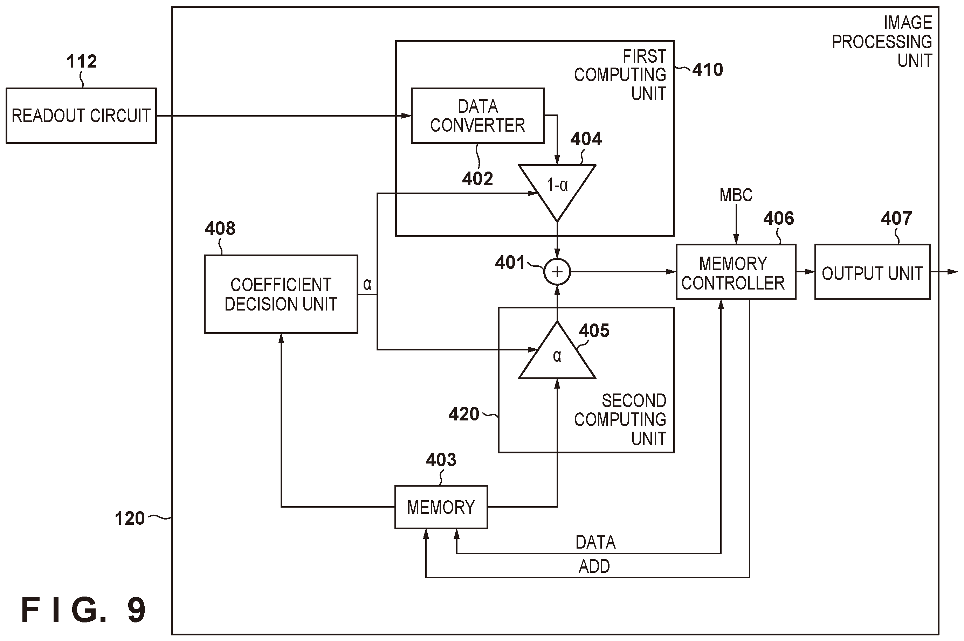

Next, a photoelectric conversion apparatus 100 according to the second embodiment will be described. Matters not mentioned in the second embodiment can follow the first embodiment. Fig. 9 is a view showing the configuration of an image processing unit 120 in the photoelectric conversion apparatus 100 according to the second embodiment. In the second embodiment, the image processing unit 120 includes a coefficient decision unit 408. The coefficient decision unit 408 can be configured to decide the first coefficient and the second coefficient based on the data stored in a memory 403. In the example shown in Fig. 9, the first coefficient is 1-α, the second coefficient is α, and the sum of the first coefficient and the second coefficient is 1. However, the first coefficient and the second coefficient may be given as independent coefficients that are uncorrelated with each other. The first coefficient can be a value larger than 0 and smaller than 1. The second coefficient can be a value larger than 0 and smaller than 1.

In the example in which the first coefficient is 1-α and the second coefficient is α, the larger the value of α, the stronger the temporal smoothing effect becomes. In this case, the SNR improves, but object blurring is likely to occur. For example, when processing the count value generated in the pixel at an arbitrary position in a pixel array region 12, α can be decided based on the value of data at the corresponding address in the memory 403 or the average value of data at addresses corresponding to a pixel group in a region including the pixel at the arbitrary position. For example, by setting small α under a high light amount (large count value) and large α under a low light amount (low count value), it is possible to achieve both improving the SNR and suppressing object blurring.

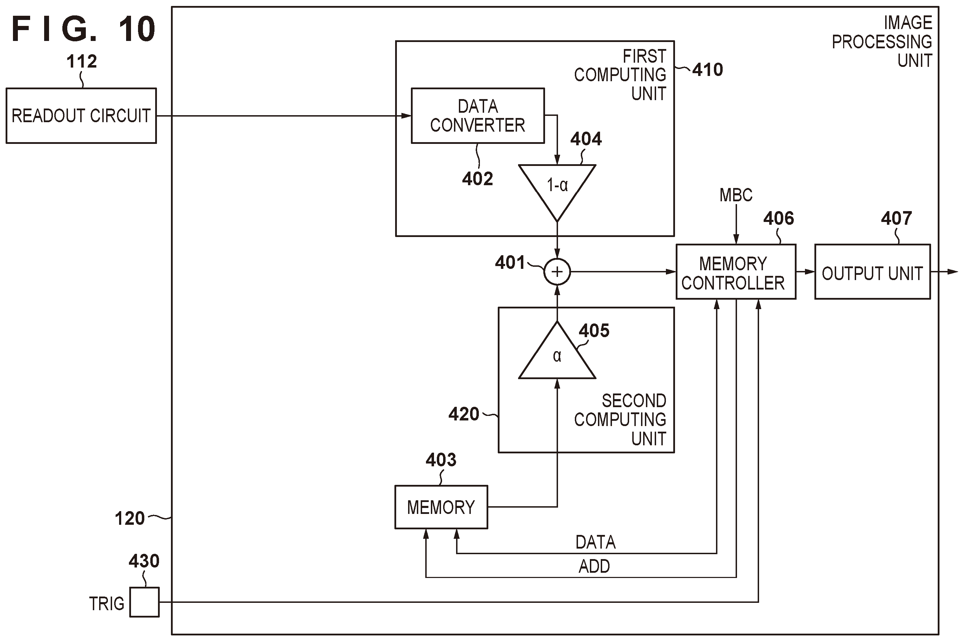

Next, a photoelectric conversion apparatus 100 according to the third embodiment will be described. Matters not mentioned in the third embodiment can follow the first and second embodiments. Fig. 10 is a view showing the configuration of an image processing unit 120 in the photoelectric conversion apparatus 100 according to the third embodiment. In the third embodiment, the photoelectric conversion apparatus 100 includes a receiving unit 430 that receives a trigger signal TRIG from the outside of the photoelectric conversion apparatus 100, and an output unit 407 of the image processing unit 120 outputs data of one frame stored in a memory 403 in response to activation of the trigger signal TRIG. In an example, a memory controller 406 can operate to read out data of one frame from the memory 403 and externally output the data via the output unit 407, in response to activation of the trigger signal TRIG. The memory 403 and the output unit 407 may be connected by a data bus. In this case, the data output from the memory 403 can be provided to the output unit 407 without intervention of the memory controller 406, and externally output from the output unit 407.

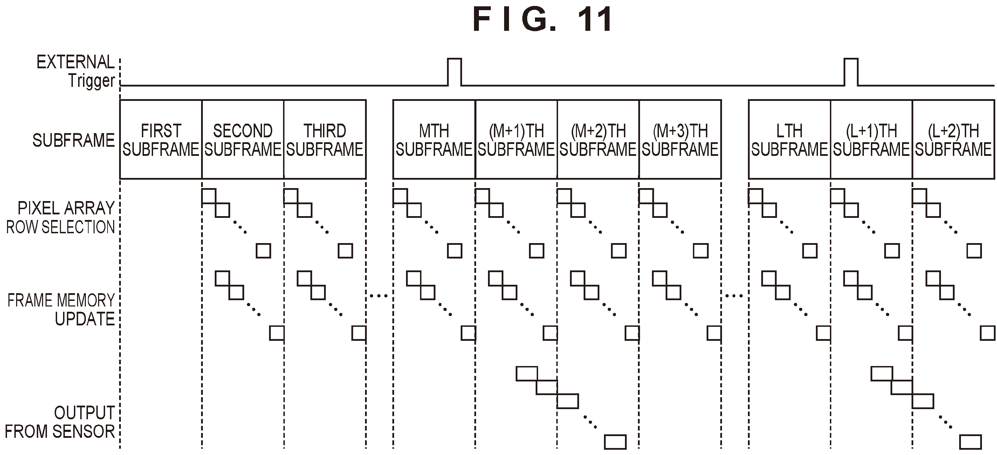

Fig. 11 exemplarily shows the operation of the photoelectric conversion apparatus 100 according to the second embodiment. The memory controller 406 can operate to read out data of one frame from the memory 403 and externally output the data via the output unit 407, in response to activation (transition to high level in the example shown in Fig. 11) of the trigger signal TRIG. In an example, in the period of the next subframe of the subframe where the trigger signal TRIG is activated, the memory controller 406 can start an operation of reading out data of one frame from the memory 403 and externally outputting the data via the output unit 407. In the period during which data of one frame is read out from the memory 403 and externally output, the memory controller 406 can operate not to update the readout target data. Alternatively, depending on the application, in the period during which data of one frame is read out from the memory 403 and externally output, the memory controller 406 may operate to update the readout target data.

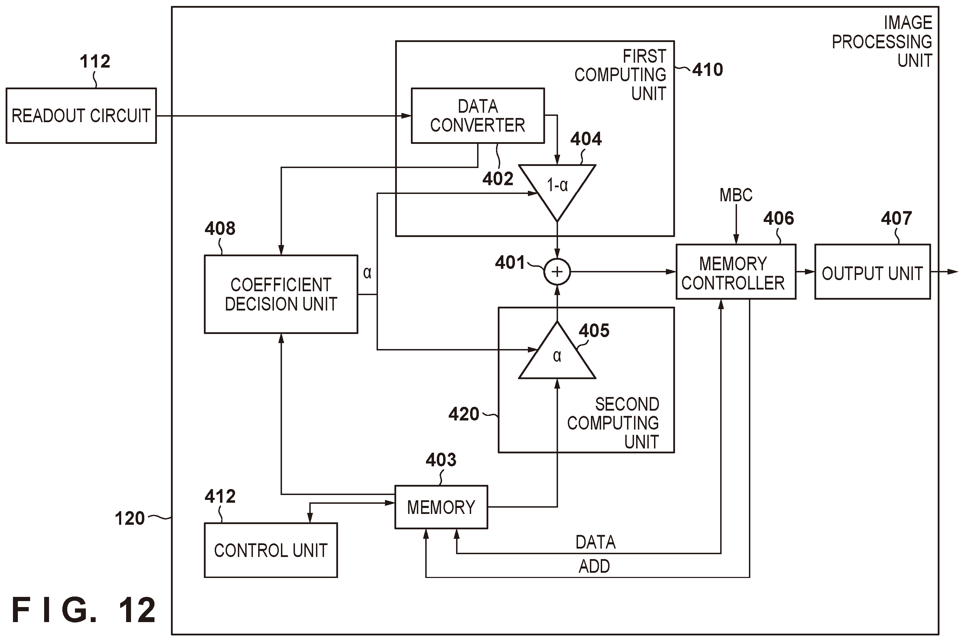

Next, a photoelectric conversion apparatus 100 according to the fourth embodiment will be described. Matters not mentioned in the fourth embodiment can follow the first to third embodiments. Fig. 12 is a view showing the configuration of an image processing unit 120 in the photoelectric conversion apparatus 100 according to the fourth embodiment. In the fourth embodiment, the image processing unit 120 includes a coefficient decision unit 408, but the coefficient decision unit 408 in the fourth embodiment is different from the coefficient decision unit 408 in the second embodiment.

The coefficient decision unit 408 can be configured to decide the first coefficient and the second coefficient based on comparison between the count value, which is obtained by a data converter 402 increasing the number of bits of the count value of the pixel at an arbitrary position in a pixel array region 12, and the data stored at the corresponding address in a memory 403. In the example shown in Fig. 12, the first coefficient is 1-α, the second coefficient is α, and the sum of the first coefficient and the second coefficient is 1. However, the first coefficient and the second coefficient may be given as independent coefficients that are uncorrelated with each other. The first coefficient can be a value larger than 0 and smaller than 1. The second coefficient can be a value larger than 0 and smaller than 1.

For example, if the difference between the count value provided from the data converter 402 and the value of data provided from the memory 403 is within a predetermined value, the coefficient decision unit 408 sets the value of α larger than a reference value to enhance the smoothing effect. On the other hand, if the difference is larger than the predetermined value (if the change in light amount is considered to be large), the coefficient decision unit 408 can set the value of α smaller than the reference value to prioritize tracking the change in light amount. With this operation, α (that is, the first coefficient and the second coefficient) is set in accordance with the magnitude of the change in light amount in a scene. This can achieve both improving the SNR and suppressing object blurring.

The image processing unit 120 may include a control unit 412. For example, the control unit 412 can detect an abnormality in the data (image) held by the memory 403 and accordingly reset all or some of a plurality of pixels 101 (for example, counter circuits 211) in the pixel array region, a readout circuit 112, and the memory 403. The control unit 412 can control the reset operation so that the reset frequency of the plurality of pixels 101 in the pixel array 12 is higher than the reset frequency of the memory 403. If an abnormality in the data (image) held by the memory 403 is detected, the control unit 412 may perform another processing, for example, noise removal processing.

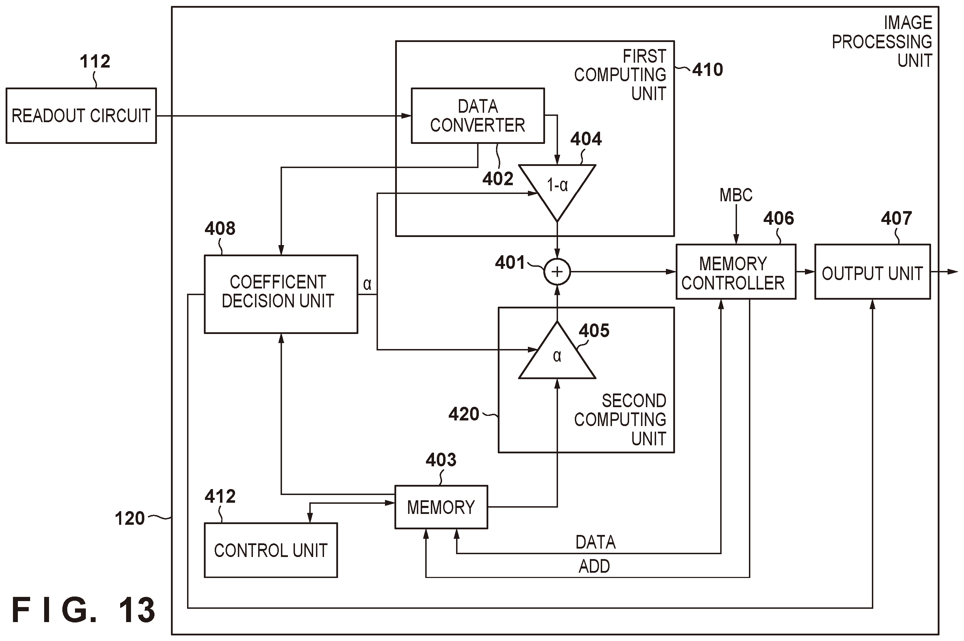

Next, a photoelectric conversion apparatus 100 according to the fifth embodiment will be described. Matters not mentioned as the fifth embodiment can follow the first to fourth embodiments. Fig. 13 is a view showing the configuration of an image processing unit 120 in the photoelectric conversion apparatus 100 according to the fifth embodiment. The fifth embodiment provides a modification of the coefficient decision unit 408 in the fourth embodiment.

As in the fourth embodiment, a coefficient decision unit 408 can be configured to decide the first coefficient and the second coefficient based on comparison between the count value provided from a data converter 402 and the data provided from the memory 403. The coefficient decision unit 408 may generate information corresponding to the difference (that is, the change in light amount) between the count value, which is obtained by the data converter 402 increasing the number of bits of the count value of the pixel at an arbitrary position in a pixel array region 12, and the data stored at the corresponding address in the memory 403. This information can be externally output via an output unit 407. The coefficient decision unit 408 can generate binary information indicating whether the difference is larger than a reference value.

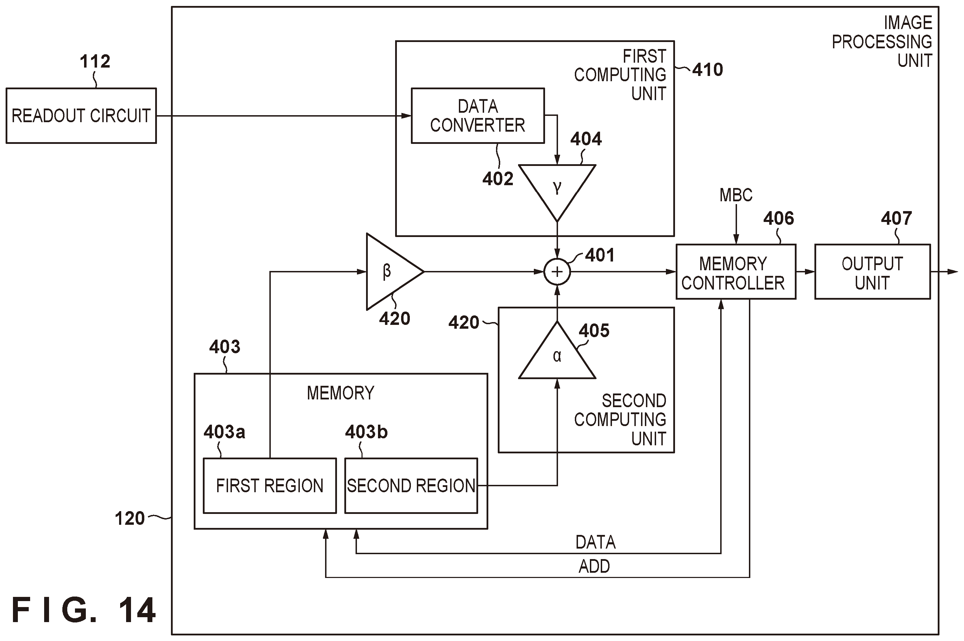

Next, a photoelectric conversion apparatus 100 according to the sixth embodiment will be described. Matters not mentioned as the sixth embodiment can follow the first to fifth embodiments. Fig. 14 is a view showing the configuration of an image processing unit 120 in the photoelectric conversion apparatus 100 according to the sixth embodiment. In the sixth embodiment, the image processing unit 120 includes a third computing unit (third multiplier) 410. The first computing unit 410 can be configured to multiply the count value generated in each pixel 101 by the first coefficient (here, γ) to generate the first computed value. The third computing unit 410 can be configured to multiply the data stored in a memory 403 in the first period by the third coefficient (here, β) to generate the third computed value. A second computing unit 420 can be configured to multiply the data stored in the memory 403 in the second period, which precedes the first period, by the second coefficient (here, α) to generate the second computed value. An adder 401 can be configured to add the first computed value, the second computed value, and the third computed value to generate an addition value.

Here, data is written in a first region 403a of the memory 403 in the first period, and data is written in a second region 403b of the memory 403 in the second period. Between the first period and the second period, the data in the first region 403a can be transferred to the second region 403b. From another viewpoint, the latest version of the addition value generated by the adder 401 is written in the first region 403a, and before that, the data in the first region 403a can be transferred to the second region 403b. The memory constituting the first region 403a and the memory constituting the second region 403b may be separate memories. In another control method, the first region 403a and the second region 403b may be switched for each subframe. In this case, data transfer from the first region 403a to the second region 403b is unnecessary.

According to the sixth embodiment, it is possible to use the data of the current subframe and the data of two subframes before the current subframe to obtain the TIIR-filtered data. With this, data with the improved SNR can be obtained.

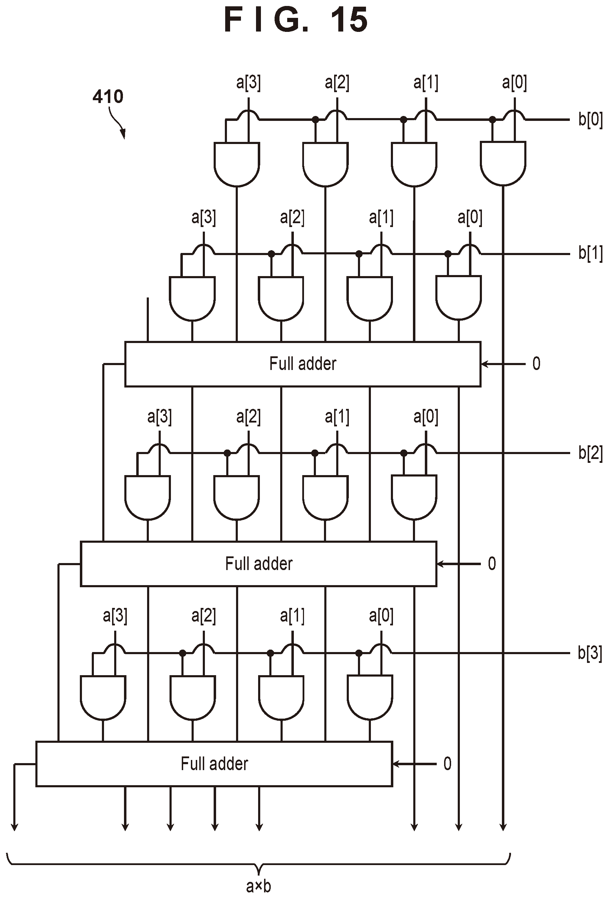

A modification or specific example of each of the first to sixth embodiments will be described below. Fig. 15 is a view showing a modification of the first computing unit 410. a[3:0] is the data (4-bit configuration in this example) indicating the count value provided from the pixel 101 at an arbitrary position via the readout circuit 112, and b[3:0] is the data (4-bit data in this example) indicating the first coefficient (here, (1-α) in the above-described example). The first computing unit 410 generates the first computed value as the result (shown as a×b) of multiplying a[3:0] and b[3:0]. In this example, the number of bits of the first computed value generated by the first computing unit 410 is eight, which is larger than four as the number of bits of the count value provided from each pixel 101 via the signal line 113 and the readout circuit 112.

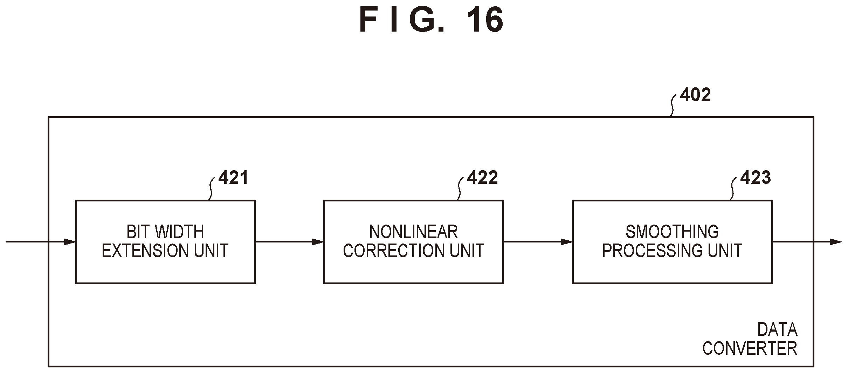

Fig. 16 is a view showing a specific example of the data converter 402 in the first computing unit 410. The data converter 402 can include, for example, at least one of a nonlinear correction unit 422 and a smoothing processing unit 423, in addition to a bit width extension unit 421.

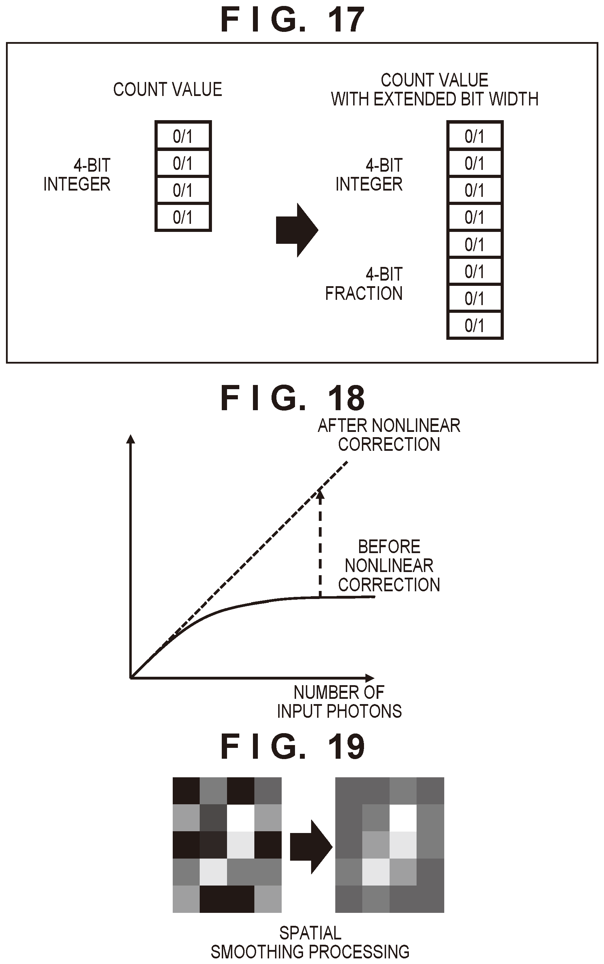

Fig. 17 schematically shows the bit width extension processing performed by the bit width extension unit 421. The bit width extension unit 421 adds one or a plurality of bits (four bits in this example) to the least significant side of the count value (four bits in this example) provided from the pixel 101. The bit extension as exemplarily shown in Fig. 17 may be implemented by giving a count value to n most significant bits of the m-bit input terminal of the subsequent circuit, and giving 0s to the (m-n) least significant bits. Note that m and n has a relationship of m > n. Fig. 18 schematically shows nonlinear correction processing performed by the nonlinear correction unit 422. As exemplarily shown in Fig. 18, the pixel 101 can have a characteristic in which the number of input photons and the output level (count value) have a nonlinear relationship. The nonlinear correction unit 422 can correct the count value provided from the pixel 101 so that the output level (count value) proportional to the number of input photons can be obtained. Fig. 19 schematically shows spatial smoothing processing performed by the smoothing processing unit 423. Examples of smoothing processing can include a convolution operation involving a moving average filter or Gaussian filter, a nonlinear operation involving a median filter, and noise reduction processing using Fourier transform or wavelet transform, but other methods may also be used.

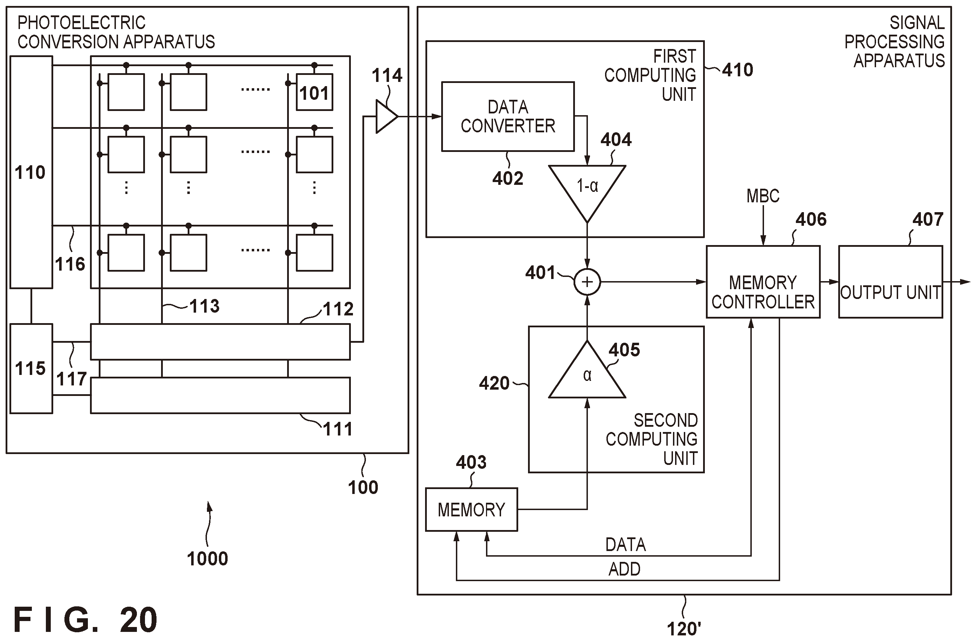

Fig. 20 shows the configuration of a photoelectric conversion system 1000 as the seventh embodiment. In the seventh embodiment, a signal processing apparatus 120' corresponding to the above-described image processing unit 120 is arranged outside a photoelectric conversion apparatus 100. Fig. 7 is referenced as a drawing showing the operation of the photoelectric conversion system 1000 shown in Fig. 20, and "output" indicates output from the signal processing apparatus 120'. The signals of the pixels in a row selected in "row selection" are read out by a readout circuit 112 and output from the photoelectric conversion apparatus 100 to the signal processing apparatus 120' via an output unit 114.

The photoelectric conversion apparatus 100 can include a plurality of pixels 101, each of which counts photons and outputs a count value, the readout circuit 112 that reads out the count value generated in each of the plurality of pixels 101, and the output unit 114 that outputs the count value read out by the readout circuit 112. The photoelectric conversion apparatus 100 can also include a control pulse generation unit 115, a horizontal scanning circuit 111, signal lines 113, and a vertical scanning circuit 110.

The signal processing apparatus 120' can include a memory 403, a first computing unit 410, a second computing unit 420, an adder 401, and a memory controller 406. The configurations and functions of the memory 403, first computing unit 410, second computing unit 420, adder 401, and memory controller 406 can be similar to those described above.

In each embodiment described above, it has been described that the count value generated by the pixel 101 is a signal with a resolution corresponding to incidence of one photon. However, the present invention is not limited to this form. For example, the pixel 101 may output a count value whose signal value increases by one when multiple photons enter. For this form, a configuration can be used in which a detection circuit for detecting a pulse signal output from a waveform shaping unit 210 is provided between the waveform shaping unit 210 and a counter circuit 211 in the pixel 101 shown in Fig. 4. In this configuration, when multiple pulse signals are input to the detection circuit, the detection circuit outputs a signal to the counter circuit 211. The counter circuit 211 counts the signal. With this, the 1 LSB (Lowest Significant Bit) of the count value generated by the counter circuit 211 corresponds to incidence of multiple photons. In this case, a data converter 402 generates a signal having a lower resolution smaller than the multiple photons corresponding to the 1 LSB of the count value generated by the counter circuit 211.

Application examples of the photoelectric conversion apparatus 100 according to each of the first to seventh embodiments will be described below. In a case of applying the seventh embodiment, the signal processing apparatus 120' can constitute a part of a signal processing apparatus that processes a signal output from an image capturing apparatus (photoelectric conversion apparatus), such as a signal processing unit 1007, an image processing unit 1312, an image processing circuit 1404, or a signal processing unit 352.

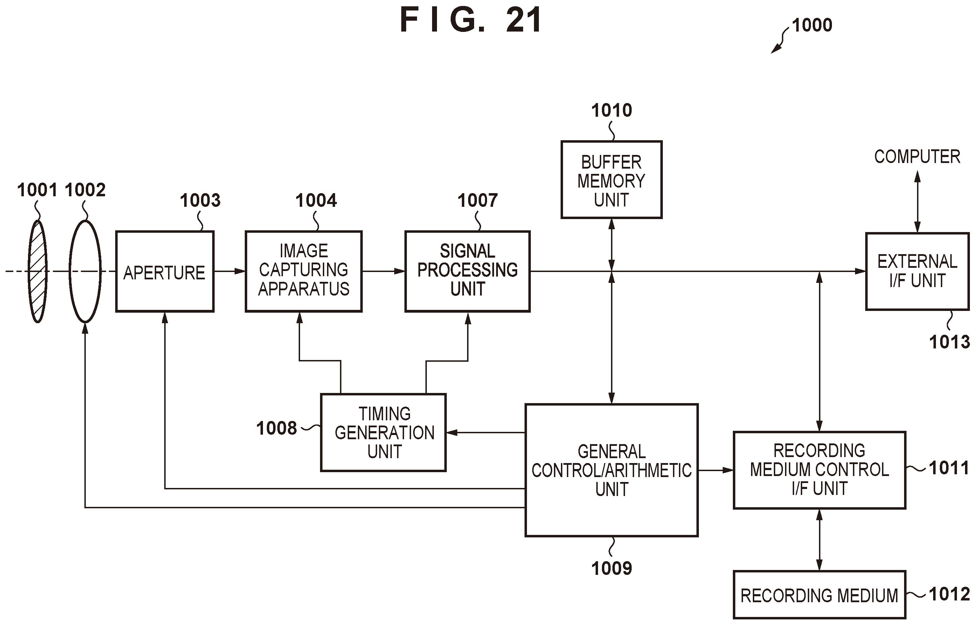

Fig. 21 is a block diagram showing the schematic configuration of a photoelectric conversion system according to the first application example.

The above-described photoelectric conversion apparatus 100 is applicable to various kinds of photoelectric conversion systems. Examples of photoelectric conversion systems to which the photoelectric conversion apparatus is applicable are a digital still camera, a digital camcorder, a monitoring camera, a copying machine, a facsimile apparatus, a mobile phone, an in-vehicle camera, and an observation satellite. A camera module including an optical system such as a lens and an image capturing apparatus is also included in the photoelectric conversion systems. Fig. 21 exemplarily shows the block diagram of a digital still camera as an example of these.

A photoelectric conversion system 1000 exemplarily shown in Fig. 21 includes an image capturing apparatus 1004 as an example of the photoelectric conversion apparatus. The photoelectric conversion system 1000 also includes a lens 1002 that forms an optical image of an object on the image capturing apparatus 1004, an aperture 1003 configured to change the amount of light passing through the lens 1002, and a barrier 1001 configured to protect the lens 1002. The lens 1002 and the aperture 1003 form an optical system (optical apparatus) that condenses light to the image capturing apparatus 1004. The image capturing apparatus 1004 is the photoelectric conversion apparatus 100 (image capturing apparatus) according to one of the above-described embodiments, and converts the optical image formed by the lens 1002 into an electrical signal.

The photoelectric conversion system 1000 also includes the signal processing unit 1007 that is an image generation unit configured to generate an image by processing an output signal output from the image capturing apparatus 1004. The signal processing unit 1007 functions as a processing apparatus that performs an operation of performing various kinds of correction and compression as needed, thereby outputting image data. The signal processing unit 1007 may be formed on a semiconductor substrate on which the image capturing apparatus 1004 is provided or may be formed on a semiconductor substrate different from the image capturing apparatus 1004. In addition, the image capturing apparatus 1004 and the signal processing unit 1007 may be formed on the same semiconductor substrate.

The photoelectric conversion system 1000 further includes a memory unit 1010 configured to temporarily store image data, and an external interface unit (external I/F unit) 1013 configured to communicate with an external computer or the like. Furthermore, the photoelectric conversion system 1000 includes a recording medium 1012 such as a semiconductor memory configured to record or read out image capturing data, and a recording medium control I/F unit 1011 configured to perform record or readout for the recording medium 1012. The recording medium control I/F unit 1011 and the recording medium 1012 can form a part of a recording apparatus. Note that the recording medium 1012 may be incorporated in the photoelectric conversion system 1000 or may be detachable.

Furthermore, the photoelectric conversion system 1000 includes a general control/arithmetic unit 1009 that controls various kinds of operations and the entire digital still camera, and a timing generation unit 1008 that outputs various kinds of timing signals to the image capturing apparatus 1004 and the signal processing unit 1007. The general control/arithmetic unit 1009 and the timing generation unit 1008 can form a part of a control apparatus configured to control an operation of the photoelectric conversion system 1000. In this example, the timing signal and the like may be input from the outside, and the photoelectric conversion system 1000 need only include at least the image capturing apparatus 1004, and the signal processing unit 1007 that processes an output signal output from the image capturing apparatus 1004.

The image capturing apparatus 1004 outputs an image capturing signal to the signal processing unit 1007. The signal processing unit 1007 executes predetermined signal processing for the image capturing signal output from the image capturing apparatus 1004, and outputs image data. The signal processing unit 1007 generates an image using the image capturing signal. Although not shown in Fig. 21, a display apparatus such as a display for displaying the generated image may be arranged in the photoelectric conversion system 1000. As described above, according to this embodiment, it is possible to implement the photoelectric conversion system 1000 to which the photoelectric conversion apparatus 100 (image capturing apparatus) according to one of the above-described embodiments is applied.

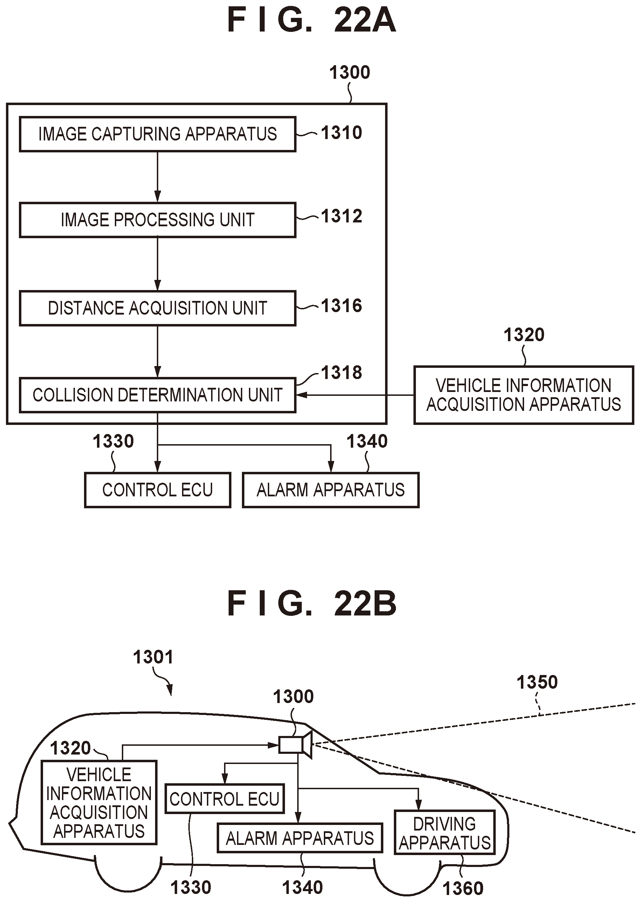

Figs. 22A and 22B are views showing the configuration of a photoelectric conversion system 1300 and a moving body 1301 according to the second application example.

Fig. 21A shows an example of a photoelectric conversion system concerning an in-vehicle camera. The photoelectric conversion system 1300 includes an image capturing apparatus 1310. The image capturing apparatus 1310 is the photoelectric conversion apparatus 100 (image capturing apparatus) described in one of the above-described embodiments. The photoelectric conversion system 1300 includes the image processing unit 1312 that performs image processing for a plurality of image data acquired by the image capturing apparatus 1310. The photoelectric conversion system 1300 also includes a distance acquisition unit 1316 that calculates the distance up to a target object, and a collision determination unit 1318 that determines, based on the calculated distance, whether there is collision possibility. Here, the distance acquisition unit 1316 may acquire distance information up to a target object by using Time of Flight (ToF) method, or may acquire distance information by using parallax information or the like. That is, the distance information is information concerning a parallax, a defocus amount, a distance up to a target object, and the like. The collision determination unit 1318 may determine collision possibility using one of the pieces of distance information. The distance acquisition unit 1316 may be implemented by exclusively designed hardware, or may be implemented by a software module. The distance acquisition unit 1316 may be implemented by a FPGA (Field Programmable Gate Array), ASIC (Application Specific Integrated Circuit), or the like. Alternatively, the distance acquisition unit 1316 may be implemented by a combination of these.

The photoelectric conversion system 1300 is connected to a vehicle information acquisition apparatus 1320, and can acquire vehicle information such as a vehicle speed, a yaw rate, and a steering angle. The photoelectric conversion system 1300 is also connected to an ECU 1330 that is a control apparatus configured to output a control signal for generating a braking force to the vehicle based on the determination result of the collision determination unit 1318. Furthermore, the photoelectric conversion system 1300 is connected to an alarm apparatus 1340 that generates an alarm to the driver based on the determination result of the collision determination unit 1318. For example, if collision possibility is high as the determination result of the collision determination unit 1318, the ECU 1330 controls a driving apparatus (machine apparatus) 1360 to perform braking, releasing the accelerator pedal, or suppressing the engine output, thereby controlling the vehicle for avoiding collision and reducing damage. The alarm apparatus 1340 sounds an alarm, displays alarm information on the screen of a car navigation system or the like, or applies a vibration to the seat belt or a steering wheel, thereby making an alarm to the user.

In this embodiment, the periphery of the vehicle (moving body 1301), for example, the front or rear side is captured by the photoelectric conversion system 1300. Fig. 21B shows the photoelectric conversion system configured to capture the front side (image capturing range 1350) of the vehicle. The vehicle information acquisition apparatus 1320 sends an instruction to the photoelectric conversion system 1300 or the image capturing apparatus 1310. With this configuration, it is possible to further improve the accuracy of distance measurement.

An example in which control is executed so as not to collide with another vehicle has been explained above. The photoelectric conversion system 1300 can also be applied to control of performing automated driving following another vehicle or control of performing automated driving without deviating from a lane. Furthermore, the photoelectric conversion system 1300 can be applied not only to a vehicle such as an automobile but also to, for example, a moving body (moving apparatus) such as a ship, an airplane, or an industrial robot. The moving body includes one or both of a driving force generation unit that generates a driving force mainly used for moving the moving body and a rotating body mainly used for moving the moving body. The driving force generation unit can be an engine, a motor, or the like. The rotating body can be a tire, a wheel, a ship screw, an aircraft propeller, or the like. In addition, the photoelectric conversion system can be applied not only to a moving body but also to equipment that broadly uses object recognition, such as an intelligent transport system (ITS).

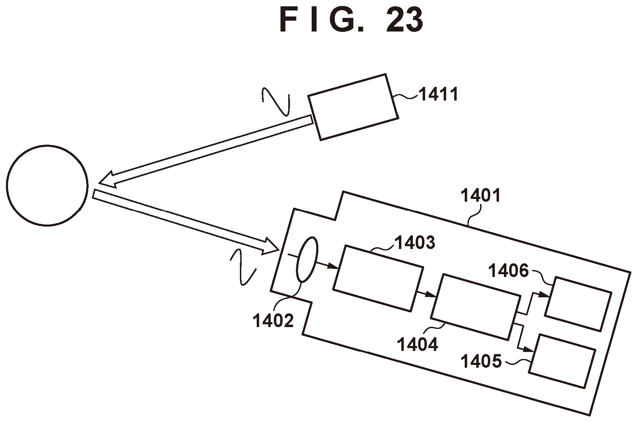

Fig. 23 is a block diagram showing an example of the configuration of a distance image sensor 1401 as the photoelectric conversion system according to the third application example.

As shown in Fig. 23, the distance image sensor 1401 includes an optical system 1407, a photoelectric conversion apparatus 1408, the image processing circuit 1404, a monitor 1405, and a memory 1406. Then, the distance image sensor 1401 can receive light (modulated light or pulsed light) projected from a light source apparatus 1409 toward an object and reflected by the surface of the object, thereby acquiring a distance image corresponding to the distance up to the object.

The optical system 1407 is formed by including one or a plurality of lenses, and guides image light (incident light) from the object to the photoelectric conversion apparatus 1408 and forms an image on the light-receiving surface (sensor portion) of the photoelectric conversion apparatus 1408.

As the photoelectric conversion apparatus 1408, the photoelectric conversion apparatus 100 of each of the above-described embodiments is applied, and a distance signal indicating a distance obtained from a light reception signal output from the photoelectric conversion apparatus 1408 is supplied to the image processing circuit 1404.

The image processing circuit 1404 performs image processing of creating a distance image based on the distance signal supplied from the photoelectric conversion apparatus 1408. Then, the distance image (image data) obtained by the image processing is supplied to and displayed on the monitor 1405, and supplied to and stored (recorded) in the memory 1406.

The distance image sensor 1401 having such configuration can acquire, for example, a more correct distance image along with improvement in characteristic of pixels by applying the above-described photoelectric conversion apparatus 100.

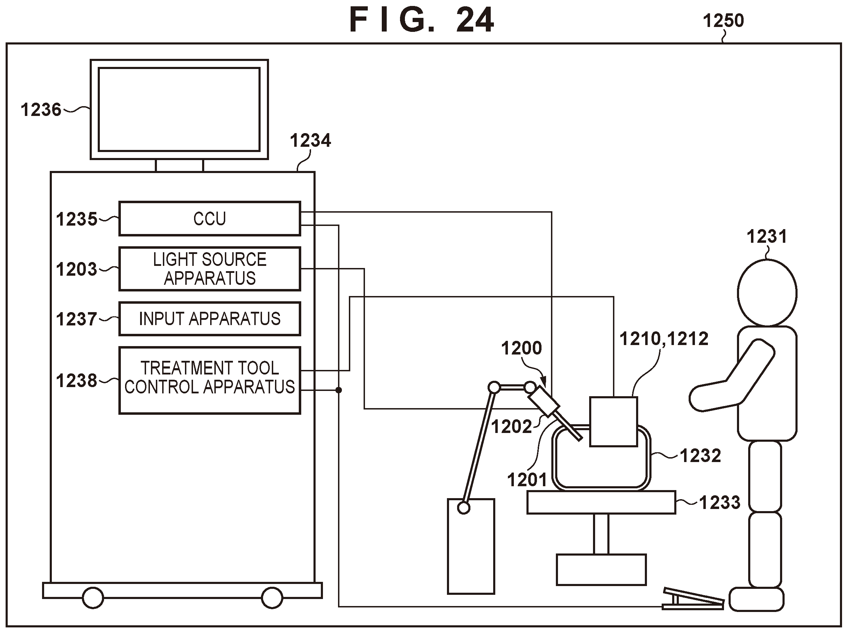

Fig. 24 is a view showing an example of the schematic arrangement of an endoscopic surgery system 1250 as the photoelectric conversion system according to the fourth application example.

Fig. 24 shows a state in which an operator (doctor) 1231 operates on a patient 1232 on a patient bed 1233 using the endoscopic surgery system 1250. As shown in Fig. 24, the endoscopic surgery system 1250 is formed from an endoscope 1200, a surgical tool 1210, and a cart 1234 on which various apparatuses for endoscopic surgery are mounted.

The endoscope 1200 includes a lens barrel 1201 including a region of a predetermined length from the distal end, which is inserted into the body cavity of the patient 1232, and a camera head 1202 connected to the proximal end of the lens barrel 1201. In the example shown in Fig. 24, the endoscope 1200 formed as a so-called hard mirror including the hard lens barrel 1201 is shown but the endoscope 1200 may be formed as a so-called soft mirror including a soft lens barrel.

An opening in which an objective lens is fitted is provided at the distal end of the lens barrel 1201. A light source apparatus 1203 is connected to the endoscope 1200, and light generated by the light source apparatus 1203 is guided to the distal end of the lens barrel by a light guide extended inside the lens barrel 1201, and is emitted to an observation target in the body cavity of the patient 1232 via the objective lens. Note that the endoscope 1200 may be a forward-viewing endoscope or may be a forward-oblique viewing endoscope or side-viewing endoscope.

An optical system and a photoelectric conversion apparatus are provided in the camera head 1202, and reflected light (observation light) from the observation target is condensed by the optical system to the photoelectric conversion apparatus. The observation light is photoelectrically converted by the photoelectric conversion apparatus to generate an electrical signal corresponding to the observation light, that is, an image signal corresponding to an observation image. As the photoelectric conversion apparatus, the photoelectric conversion apparatus 100 (image capturing apparatus) described in each of the above-described embodiments can be used. The image signal is transmitted as RAW data to a Camera Control Unit (CCU) 1235.

The CCU 1235 is formed by a CPU (Central Processing Unit), a GPU (Graphics Processing Unit), and the like, and comprehensively controls the operations of the endoscope 1200 and a display apparatus 1236. Furthermore, the CCU 1235 receives an image signal from the camera head 1202, and performs, for the image signal, various kinds of image processes such as development processing (demosaic processing) for displaying an image based on the image signal.

Under the control of the CCU 1235, the display apparatus 1236 displays the image based on the image signal having undergone the image processing by the CCU 1235.

The light source apparatus 1203 is formed from a light source such as an LED (Light Emitting Diode), and supplies, to the endoscope 1200, irradiation light at the time of imaging an operation portion or the like.

An input apparatus 1237 is an input interface to the endoscopic surgery system 1250. The user can input various kinds of information or instructions to the endoscopic surgery system 1250 via the input apparatus 1237.

A treatment tool control apparatus 1238 controls driving of an energy treatment tool 1212 for ablation or incision of the tissue, sealing of a blood vessel, or the like.

The light source apparatus 1203 that supplies, to the endoscope 1200, irradiation light at the time of imaging an operation portion can be formed from, for example, a white light source formed by an LED, a laser light source, or a combination thereof. If the white light source is formed by a combination of RGB laser light sources, it is possible to accurately control the output intensity and output timing of each color (each wavelength), and thus the light source apparatus 1203 can adjust the white balance of a captured image. In this case, the observation target is time-divisionally irradiated with laser beams from the RGB laser light sources, respectively, and driving of the image sensor of the camera head 1202 is controlled in synchronism with the irradiation timings, thereby making it possible to time-divisionally capture images respectively corresponding to R, G, and B. In this method, it is possible to obtain a color image without providing color filters in the image sensor.

Driving of the light source apparatus 1203 may be controlled to change the intensity of light to be output for every predetermined time. It is possible to time-divisionally acquire images by controlling driving of the image sensor of the camera head 1202 in synchronism with the timing of changing the intensity of the light, and combine the images, thereby generating an image of a high dynamic range without so-called shadow detail loss or highlight detail loss.

The light source apparatus 1203 may be configured to supply light in a predetermined wavelength band corresponding to special light observation. In special light observation, for example, the wavelength dependency of light absorption in the body tissue is used. More specifically, by performing irradiation with light in a narrow band, as compared with irradiation light (that is, white light) at the time of normal observation, predetermined tissue such as a blood vessel in the mucous membrane surface layer is captured with high contrast. Alternatively, in special light observation, fluorescence observation for obtaining an image by using fluorescence generated by performing radiation with excitation light may be performed. In fluorescence observation, it is possible to, for example, irradiate body tissue with excitation light and observe fluorescence from the body tissue, or locally inject a reagent such as indocyanine green (ICG) to body tissue while irradiating the body tissue with excitation light corresponding to the fluorescence wavelength of the reagent, thereby obtaining a fluorescence image. The light source apparatus 1203 can be configured to supply narrow band light and/or excitation light corresponding to such special light observation.

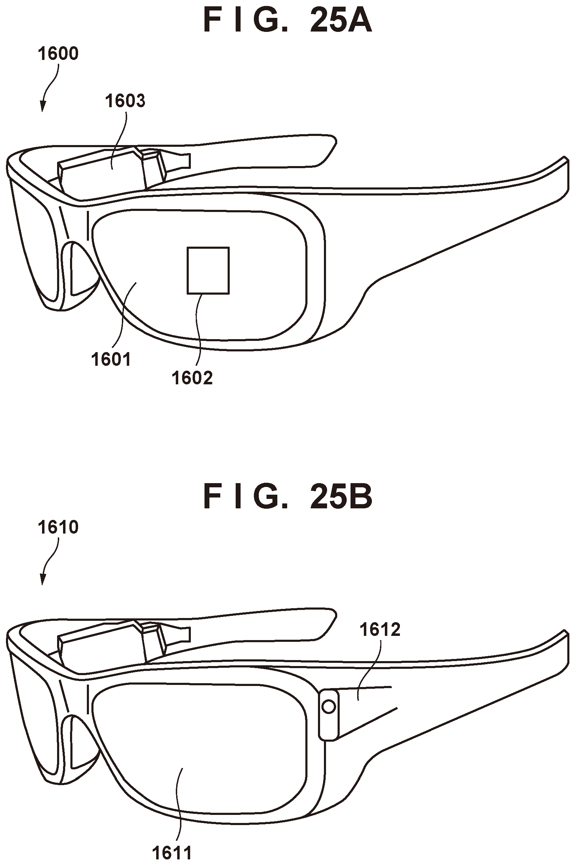

Figs. 25A and 25B describe glasses 1600 (smartglasses) as the photoelectric conversion system according to the fifth application example. The glasses 1600 include a photoelectric conversion apparatus 1602. The photoelectric conversion apparatus 1602 is the photoelectric conversion apparatus 100 (image capturing apparatus) described in each of the above embodiments. A display apparatus including the light emitting apparatus such as an OLED or LED may be provided on the back surface side of a lens 1601. One or a plurality of photoelectric conversion apparatuses 1602 may be provided. Alternatively, a plurality of kinds of photoelectric conversion apparatuses may be used in combination. The arrangement position of the photoelectric conversion apparatus 1602 is not limited to that shown in Fig. 25A.

The glasses 1600 further include a control apparatus 1603. The control apparatus 1603 functions as a power supply that supplies electric power to the photoelectric conversion apparatus 1602 and the above-described display apparatus. In addition, the control apparatus 1603 controls the operations of the photoelectric conversion apparatus 1602 and the display apparatus. An optical system configured to condense light to the photoelectric conversion apparatus 1602 is formed on the lens 1601.

Fig. 25B describes glasses 1610 (smartglasses) according to another fifth application example. The glasses 1610 include a control apparatus 1612, and a photoelectric conversion apparatus corresponding to the photoelectric conversion apparatus 1602 and a display apparatus are mounted on the control apparatus 1612. The photoelectric conversion apparatus in the control apparatus 1612 and an optical system configured to project light emitted from the display apparatus are formed in a lens 1611, and an image is projected to the lens 1611. The control apparatus 1612 functions as a power supply that supplies electric power to the photoelectric conversion apparatus and the display apparatus, and controls the operations of the photoelectric conversion apparatus and the display apparatus. The control apparatus may include a line-of-sight detection unit that detects the line of sight of a wearer. The detection of a line of sight may be done using infrared rays. An infrared ray emitting unit emits infrared rays to an eyeball of the user who is gazing at a displayed image. An image capturing unit including a light receiving element detects reflected light of the emitted infrared rays from the eyeball, thereby obtaining a captured image of the eyeball. A reduction unit for reducing light from the infrared ray emitting unit to the display unit in a plan view is provided, thereby reducing deterioration of image quality.

The line of sight of the user to the displayed image is detected from the captured image of the eyeball obtained by capturing the infrared rays. An arbitrary known method can be applied to the line-of-sight detection using the captured image of the eyeball. As an example, a line-of-sight detection method based on a Purkinje image obtained by reflection of irradiation light by a cornea can be used.

More specifically, line-of-sight detection processing based on pupil center corneal reflection is performed. Using pupil center corneal reflection, a line-of-sight vector representing the direction (rotation angle) of the eyeball is calculated based on the image of the pupil and the Purkinje image included in the captured image of the eyeball, thereby detecting the line-of-sight of the user.

The display apparatus according to the embodiment can include a photoelectric conversion apparatus including a light receiving element, and control a displayed image of the display apparatus based on the line-of-sight information of the user from the photoelectric conversion apparatus.

More specifically, the display apparatus decides the first visual field region at which the user is gazing and the second visual field region other than the first visual field region based on the line-of-sight information. The first visual field region and the second visual field region may be decided by the control apparatus of the display apparatus, or those decided by an external control apparatus may be received. In the display region of the display apparatus, the display resolution of the first visual field region may be controlled to be higher than the display resolution of the second visual field region. That is, the resolution of the second visual field region may be lower than that of the first visual field region.

In addition, the display region includes the first display region and the second display region different from the first display region, and a region of higher priority may be decided from the first display region and the second display region based on line-of-sight information. The first visual field region and the second visual field region may be decided by the control apparatus of the display apparatus, or those decided by an external control apparatus may be received. The resolution of the region of higher priority may be controlled to be higher than the resolution of the region other than the region of higher priority. That is, the resolution of the region of relatively low priority may be low.

Note that AI may be used to decide the first visual field region or the region of higher priority. The AI may be a model configured to estimate the angle of the line of sight and the distance to a target object ahead the line of sight from the image of the eyeball using the image of the eyeball and the direction of actual viewing of the eyeball in the image as supervised data. The AI program may be held by the display apparatus, the photoelectric conversion apparatus, or an external apparatus. If the external apparatus holds the AI program, information is transmitted to the display apparatus via communication.

When performing display control based on line-of-sight detection, smartglasses further including a photoelectric conversion apparatus configured to capture the image of the outside can preferably be applied. The smartglasses can display the captured outside image information in real time.

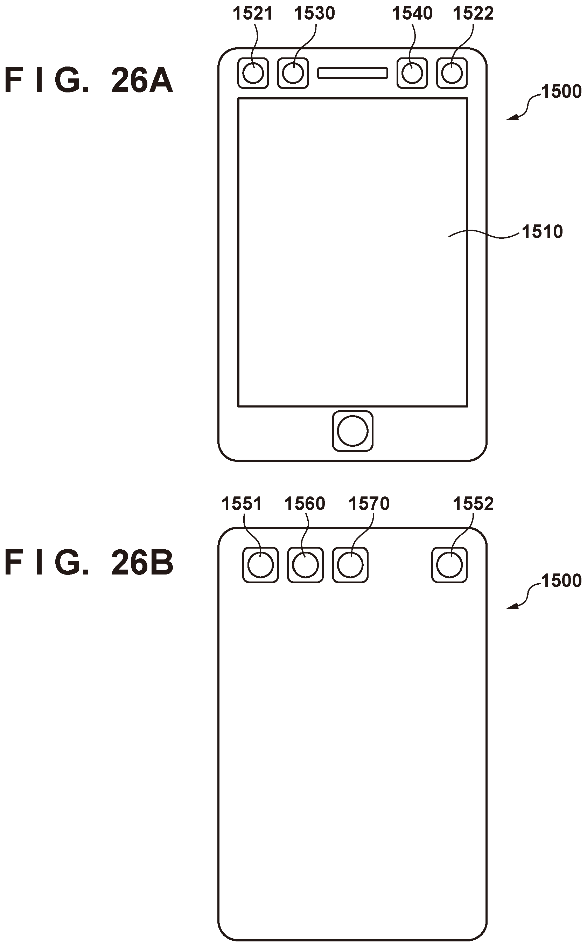

Figs. 26A and 26B are views showing electronic equipment according to the sixth application example. The electronic equipment can be formed as, for example, a smartphone or a tablet.

Fig. 26A shows the front surface side of an electronic equipment 1500, and Fig. 26B shows the back surface side of the electronic equipment 1500.

As shown in Fig. 26A, a display 1510 that displays an image is arranged at the center of the front surface of the electronic equipment 1500. Then, front cameras 1521 and 1522 for each of which the above-described photoelectric conversion apparatus 100 is used, an IR light source 1530 that emits infrared rays, and a visible light source 1540 that emits visible light are arranged along the upper side of the front surface of the electronic equipment 1500.

As shown in Fig. 26B, rear cameras 1551 and 1552 for each of which the above-described photoelectric conversion apparatus 100 is used, an IR light source 1560 that emits infrared rays, and a visible light source 1570 that emits visible light are arranged along the upper side of the back surface of the electronic equipment 1500.

By applying the above-described photoelectric conversion apparatus 100, the electronic equipment 1500 having the above arrangement can capture, for example, an image of higher quality. Note that the photoelectric conversion apparatus can be applied to electronic equipment such as an infrared sensor, a distance measurement sensor using an active infrared source, a security camera, or a personal or biometric authentication camera. This can improve the accuracy and performance of the electronic equipment.

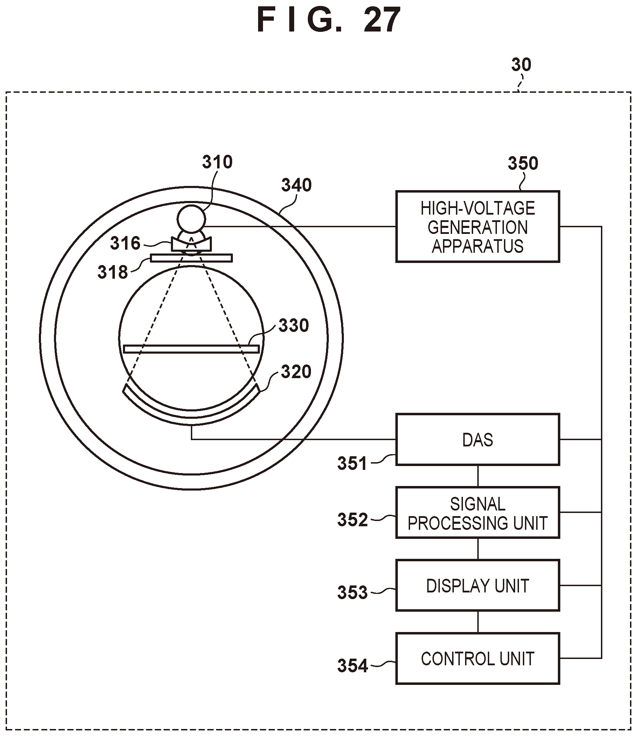

Fig. 27 is a block diagram of an X-ray CT apparatus according to the seventh application example. The above-described photoelectric conversion apparatus 100 is applicable to a detector of the X-ray CT apparatus. An X-ray CT apparatus 30 according to this embodiment includes an X-ray generation unit 310, a wedge 316, a collimator 318, an X-ray detection unit 320, a top plate 330, a rotating frame 340, and a high-voltage generation apparatus 350. The X-ray CT apparatus 30 also includes a Data Acquisition System (DAS) 351, the signal processing unit 352, a display unit 353, and a control unit 354.

The X-ray generation unit 310 is formed from, for example, a vacuum tube that generates X-rays. The vacuum tube of the X-ray generation unit 310 is supplied with a filament current and a high voltage from the high-voltage generation apparatus 350. When thermoelectrons are emitted from a cathode (filament) to an anode (target), X-rays are generated.

The wedge 316 is a filter that adjusts the amount of X-rays emitted from the X-ray generation unit 310. The wedge 316 attenuates the amount of X-rays so that the X-rays emitted from the X-ray generation unit 310 to an object has a predetermined distribution. The collimator 318 is formed from a lead plate that narrows the irradiation range of the X-rays having passed through the wedge 316. The X-rays generated by the X-ray generation unit 310 is formed in a cone beam shape via the collimator 318, and the object on the top plate 330 is irradiated with the X-rays.

The X-ray detection unit 320 is formed using the above-described photoelectric conversion apparatus 100. The X-ray detection unit 320 detects the X-rays having passed through the object from the X-ray generation unit 310, and outputs a signal corresponding to the amount of the X-rays to the DAS 351.

The rotating frame 340 is annular, and is configured to be rotatable. The X-ray generation unit 310 (the wedge 316 and the collimator 318) and the X-ray detection unit 320 are arranged to face each other in the rotating frame 340. The X-ray generation unit 310 and the X-ray detection unit 320 can rotate together with the rotating frame 340.

The high-voltage generation apparatus 350 includes a boosting circuit, and outputs a high voltage to the X-ray generation unit 310. The DAS 351 includes an amplification circuit and an A/D conversion circuit, and outputs, as digital data, a signal from the X-ray detection unit 320 to the signal processing unit 352.

The signal processing unit 352 includes a CPU (Central Processing Unit), a ROM (Read Only Memory), and a RAM (Random Access Memory), and can execute image processing and the like for the digital data. The display unit 353 includes a flat display apparatus or the like, and can display an X-ray image. The control unit 354 includes a CPU, a ROM, a RAM, and the like, and controls the operation of the overall X-ray CT apparatus 30.

The above-described embodiments can be changed appropriately without departing from the technical concept. Note that contents disclosed in this specification include not only contents described in this specification but also all items that can be grasped from this specification and its accompanying drawings. The contents disclosed in this specification include a complementary set of concepts described in this specification. That is, if, for example, "A is larger than B" is described in this specification, this specification is considered to disclose "A is not larger than B" even if a description of "A is not larger than B" is omitted. This is because if "A is larger than B" is described, it is assumed that a case in which "A is not larger than B" has been considered.

This application claims priority from Japanese Patent Application No. 2024-013301 filed January 31, 2024, which is hereby incorporated by reference herein.

The present invention is not limited to the above embodiments and various changes and modifications can be made within the spirit and scope of the present invention. Therefore, to apprise the public of the scope of the present invention, the following claims are made.

### REFERENCE SIGNS LIST

100: photoelectric conversion apparatus, 401: adder, 402: data converter, 403: memory, 404: first multiplier, 405: second multiplier, 406: memory controller, 407: output unit, 410: first computing unit, 420: second computing unit

## Claims

1. A photoelectric conversion apparatus that includes a plurality of pixels, each of which counts photons and outputs a count value, comprising:
a memory;
a first computing unit configured to multiply a count value generated in each pixel by a first coefficient to generate a first computed value;
a second computing unit configured to multiply data provided from the memory by a second coefficient to generate a second computed value;
an adder configured to add the first computed value and the second computed value to generate an addition value; and
a memory controller configured to update data stored in the memory in accordance with the addition value,
wherein the number of bits of the first computed value generated by the first computing unit is larger than the number of bits of the count value.

2. The photoelectric conversion apparatus according to claim 1, wherein
the number of bits of the second computed value generated by the second computing unit and the number of bits of the addition value generated by the adder are larger than the number of bits of the count value.

3. The photoelectric conversion apparatus according to claim 1 or 2, wherein
the first computing unit includes a data converter that increases the number of bits of the count value provided from each pixel, and a multiplier that multiplies a count value with the number of bits increased by the data converter by the first coefficient to generate the first computed value.

4. The photoelectric conversion apparatus according to claim 3, wherein
the data converter performs nonlinear correction processing after increasing the number of bits of the count value provided from each pixel.

5. The photoelectric conversion apparatus according to claim 3, wherein
the data converter performs nonlinear correction processing and smoothing processing after increasing the number of bits of the count value provided from each pixel.

6. The photoelectric conversion apparatus according to any one of claims 1 to 5, wherein
the memory controller compresses the addition value generated by the adder to generate compressed data, and updates a value stored in the memory based on the compressed data.

7. The photoelectric conversion apparatus according to claim 6, wherein
the second computing unit generates the second computed value by multiplying data, which is obtained by decompressing the compressed data provided from the memory, by the second coefficient.

8. The photoelectric conversion apparatus according to any one of claims 1 to 7, wherein
the first coefficient is a value larger than 0 and smaller than 1, and
the second coefficient is a value larger than 0 and smaller than 1.

9. The photoelectric conversion apparatus according to any one of claims 1 to 8, wherein
the sum of the first coefficient and the second coefficient is 1.

10. The photoelectric conversion apparatus according to any one of claims 1 to 9, further comprising
a coefficient decision unit configured to decide the first coefficient and the second coefficient based on data stored in the memory.

11. The photoelectric conversion apparatus according to any one of claims 1 to 9, further comprising
a coefficient decision unit configured to decide the first coefficient and the second coefficient based on the count value provided from each pixel and data stored in the memory.

12. The photoelectric conversion apparatus according to any one of claims 1 to 9, further comprising
a coefficient decision unit configured to decide the first coefficient and the second coefficient based on a difference between the count value provided from each pixel and data stored in the memory.

13. The photoelectric conversion apparatus according to any one of claims 1 to 12, further comprising:
a receiving unit configured to receive a trigger signal, and
an output unit configured to output data of one frame stored in the memory in response to activation of the trigger signal by the receiving unit.

14. The photoelectric conversion apparatus according to any one of claims 1 to 12, further comprising
an output unit configured to output information corresponding to a difference between the count value provided from each pixel and data stored in the memory.

15. The photoelectric conversion apparatus according to any one of claims 1 to 14, further comprising
a third computing unit,
wherein
the third computing unit multiplies data stored in the memory in a first period by a third coefficient to generate a third computed value,
the second computing unit multiplies data stored in the memory in a second period, which precedes the first period, by a second coefficient to generate the second computed value, and
the adder adds the first computed value, the second computed value, and the third computed value to generate the addition value.

16. The photoelectric conversion apparatus according to any one of claims 1 to 15, wherein
a reset frequency of the plurality of pixels is higher than a reset frequency of the memory.

17. The photoelectric conversion apparatus according to any one of claims 1 to 16, wherein
based on a correction signal, which is used to correct image blurring caused by vibration of an image capturing apparatus, the memory controller decides an address in the memory to be updated in accordance with the addition value.

18. The photoelectric conversion apparatus according to any one of claims 1 to 7, wherein
each pixel includes an avalanche photodiode.

19. The photoelectric conversion apparatus according to claim 18, wherein
each pixel further includes a waveform shaping unit connected to the avalanche photodiode, and a counter circuit that generates a first count value by counting a pulse signal output from the waveform shaping unit, and
the first computing unit includes a data converter that increases the number of bits of the first count value provided from each pixel, and a multiplier that multiplies a count value with the number of bits increased by the data converter by the first coefficient to generate the first computed value.

20. The photoelectric conversion apparatus according to any one of claims 1 to 19, wherein
the plurality of pixels, the memory, the first computing unit, the second computing unit, the adder, and the memory controller are arranged in a single semiconductor chip.

21. The photoelectric conversion apparatus according to claim 20, wherein
in the single semiconductor chip, the plurality of pixels are arranged in one semiconductor layer, and at least one of the memory, the first computing unit, the second computing unit, the adder, and the memory controller is arranged in another semiconductor layer.

22. A photoelectric conversion system comprising:
a photoelectric conversion apparatus defined in any one of claims 1 to 21; and
a signal processing unit configured to process a signal output from the photoelectric conversion apparatus.

23. A moving body that includes a photoelectric conversion apparatus defined in any one of claims 1 to 21, comprising
a control unit configured to control movement of the moving body by using a signal output from the photoelectric conversion apparatus.

24. A photoelectric conversion system that includes a photoelectric conversion apparatus, and a signal processing apparatus configured to process a signal output from the photoelectric conversion apparatus, wherein
the photoelectric conversion apparatus includes a plurality of pixels, each of which counts photons and outputs a count value, a readout circuit that reads out a count value generated in each of the plurality of pixels, and an output unit that outputs a count value read out by the readout circuit,
the signal processing apparatus includes
a memory,
a first computing unit that multiplies a count value generated in each pixel by a first coefficient to generate a first computed value,
a second computing unit that multiplies data provided from the memory by a second coefficient to generate a second computed value,
an adder that adds the first computed value and the second computed value to generate an addition value, and
a memory controller that updates data stored in the memory in accordance with the addition value, and
the number of bits of the first computed value generated by the first computing unit is larger than the number of bits of the count value.

25. A moving body that includes a photoelectric conversion system defined in claim 24, comprising
a control unit configured to control movement of the moving body by using a signal output from the photoelectric conversion system.
